(19) Europäisches Patentamt
European Patent Office
Office européen des brevets

(11) **EP 4 526 204 B1**

(12) **EUROPEAN PATENT SPECIFICATION**

(45) Date of publication and mention
of the grant of the patent:
**28.01.2026 Bulletin 2026/05**

(21) Application number: **23812743.5**

(22) Date of filing: **24.05.2023**

(51) International Patent Classification (IPC):
*B63B 81/00* (2020.01)    *B63B 79/20* (2020.01)
*B63B 79/30* (2020.01)    *G06Q 10/20* (2023.01)
*G06N 5/00* (2023.01)    *G06Q 10/0635* (2023.01)
*G06Q 10/04* (2023.01)

(52) Cooperative Patent Classification (CPC):
**B63B 81/00; G06Q 10/04; G06Q 10/0635;
G06Q 10/06395; G06Q 10/20; G06Q 50/40**

(86) International application number:
**PCT/US2023/067403**

(87) International publication number:
**WO 2023/230510 (30.11.2023 Gazette 2023/48)**

(54) **LIVE RISK ANALYSIS MODEL AND MULTI-FACET PROFILE FOR IMPROVED VESSEL OPERATIONS AND CLASS SURVEY**

LIVE-RISIKOANALYSEMODELL UND MULTIFACETTENPROFIL FÜR VERBESSERTE GEFÄSSOPERATIONEN UND KLASSENÜBERWACHUNG

MODÈLE D'ANALYSE DE RISQUES EN DIRECT ET PROFIL À FACETTES MULTIPLES POUR DES OPÉRATIONS DE NAVIRE ET UNE ÉTUDE DE CLASSE AMÉLIORÉES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.05.2022 US 202263345819 P**

(43) Date of publication of application:
**26.03.2025 Bulletin 2025/13**

(73) Proprietor: **American Bureau of Shipping
Spring, TX 77389 (US)**

(72) Inventors:
• **VANDERHORN, Eric
Spring, TX 77386 (US)**
• **SERRATELLA, Christopher
Sugar Land, TX 77478 (US)**
• **DIVIN, Joshua
Spring, TX 77389 (US)**
• **NANDA, Subrat
Katy, TX 77494 (US)**

(74) Representative: **Meissner Bolte Nürnberg
Patentanwälte Rechtsanwälte
Partnerschaft mbB
Bankgasse 3
90402 Nürnberg (DE)**

(56) References cited:
US-A1- 2015 120 585    US-A1- 2015 149 135
US-A1- 2018 341 729    US-A1- 2018 356 826
US-A1- 2020 184 828    US-A1- 2022 129 909

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>TECHNICAL FIELD</u>

This disclosure generally relates to marine and offshore vessels with respect to class, statutory and regulatory compliance.

<u>BACKGROUND</u>

Classification requirements have driven the scope and periodicity of ship inspection, survey, and major maintenance events such as drydocking for over 150 years. These requirements are laid out in class rules, often adopted by regulatory bodies, and cover the survey after construction (SAC) scope and frequency for vessels after delivery, in order to verify compliance with the class rules. Such rules are enforced after construction by survey activity that covers both verification and validation that these vessels meet a minimum standard of safety, seaworthiness, and mechanical or structural integrity. By adoption, governing international maritime, flag state, and port state requirements also adopt such class standards and by agreement, allowing the classification society to enforce not only their respective class rules but to be delegated by such bodies a large majority of additional statutory or regulatory requirements those organizations are required to enforce. US2022/0129909 A1 discloses a method for providing detention prevention and risk assessment service to a vessel i.e. ship, involves determining whether detention risk is present at next destination, and performing actions to minimize detention risk by network device in response to applying of criteria. While there is some scaling of scope with respect to age of the vessel in general (covering a degree of increased scrutiny as the vessel ages), all such requirements (class, regulatory and statutory) are still enforced with an equal periodicity based on standard cycle of annual, 2.5-year or 5-year frequencies that apply these SAC requirements regardless of vessel type, age, condition, or service exposure.

<u>SUMMARY OF PARTICULAR EMBODIMENTS</u>

In particular embodiments, a computing system may institutionalize a data-driven and condition-based approach to class survey by establishing an enrollment of a condition-based program (CBP) and sustainment framework based on a range of vessel classification ("class") activities coupled with implementation and sustainment supporting services, models, and tools. The computing system may utilize a predictive compliance model (PCM) which comprises the data, services and tools within the condition-based program and risk profile so they can be utilized by surveyors in the field. The predictive compliance model may enable a practical synthesis of output of these individual services and tools into a new form of risk-profiled class model. Once implemented, embodiments of the condition-based program may leverage the data driven capabilities and associated insights to support vessel owners' or operators' in-service decision-making processes for lifecycle support as well as to support a CBP-driven class survey approach that may decouple the class survey requirements from the traditional calendar-based approach. In particular embodiments, the condition-based program and its supporting predictive compliance model may increase understanding of both vessel condition and class compliance risks associated with a vessel's technical readiness profile (e.g., based on critical hull, machinery and electrical (HM&E) systems in support of maintenance planning and optimization) as well as risk associated with class compliance requirements, management systems, regulatory and statutory regimes, sustainability and fuel/emissions compliance, for marine vessels. Although this disclosure describes utilizing particular models by particular systems for particular analysis of vessels in a particular manner, this disclosure contemplates utilizing any suitable model by any suitable system for any suitable analysis of vessels in any suitable manner.

In particular embodiments, the computing system may access a plurality of data profiles associated with a vessel. The plurality of data profiles may comprise at least a first data profile configured for assessing condition or integrity risks associated with the vessel, a second data profile configured for assessing statutory, regulatory, and port state control, a third data profile configured for assessing quality of one or more management systems, a fourth data profile configured for assessing class trend associated with one or more sister vessels, and a fifth data profile configured for assessing sustainability based on fuel consumption and emissions. In particular embodiments, the computing system may analyze the accessed data profiles by a predictive compliance model configured for quantifying and assessing an overall risk associated with vessels being out of compliance with one or more standards. As an example and not by way of limitation, the predictive compliance model may comprise one or more data models and one or more computational models. In particular embodiments, the computing system may determine, based on the analysis, a class-related risk profiling capability and one or more risks of systems and components associated with the vessel with respect to condition and class compliance. The computing system may further send, to a client system, instructions for presenting the class-related risk profiling capability and the one or more risks of systems and components associated with the vessel with respect to condition and class compliance to a user (e.g., a vessel operator).

Certain technical challenges exist for effectively analyzing vessel health, performance, and mission readiness. One technical challenge may include utilizing constantly refreshed and analyzed multi-facet profile of a vessel. One solution presented by the embodiments disclosed herein to address this challenge may be generating the multi-facet profile based on a condition profile, as the condition profile includes a deep dive down to the vessel's systems and their components using live data from the vessel itself with a set of models and tools that assess condition or integrity risk. Another solution presented by the embodiments disclosed herein to address this challenge may be generating the multi-facet profile based on performance, management system effectiveness, statutory and regulatory risk, and also its sister vessels' risk profiles as this comprehensiveness may provide for the most comprehensive profile of a vessel's compliance state and the operator's ability to manage that vessel without incident. Another solution presented by the embodiments disclosed herein to address this challenge may be generating the multi-facet profile based on environmental and sustainability performance that coupled with the condition and compliance risk profiles, as they may provide for a state-of-the-art vessel risk profile that is comprehensive enough to challenge rigid calendar-based class and statutory regimes. Another technical challenge may include generating the condition profile. The solution presented by the embodiments disclosed herein to address this challenge may be utilizing a combination of data analytics and first principles based finite element analysis of the vessel's hull and machinery utilizing digital twins in various forms as the combination for these technologies may effectively leverage all potential data sources and types related to vessel operations residing within class as well as being sourced live or in near real-time from the user. Another technical challenge may include effectively leveraging user data related to condition, maintenance program health and first-party data related to class program health. The solution presented by the embodiments disclosed herein to address this challenge may be transforming such data into both lagging and leading PCM factors as lagging factors derived from transactional data sets are focused on surveyor condition scoring, user maintenance completion and effectiveness, condition monitoring or smart technology functions, and conditions of class and leading factors derived from contextual, transactional and time-series data are focused on predictive condition and reliability trending to analyze the data to contribute to the leading risk profile.

Certain embodiments disclosed herein may provide one or more technical advantages. A technical advantage of the embodiments may include facilitating both survey optimization and survey risk reduction by targeting data-driven crediting of aspects of the scope down to the system and equipment level of granularity, as well as the frequency of larger downtime driven events as risk optimization with the assurance that items that are of high risk to any compliance facet are paid enhanced scrutiny while also considering their limited time on board, scope optimization via risk profiling allows focus on high-risk items and less emphasis on low risk while covering the required scope within a highly constrained time window to cover the entire scope of the survey in question, and frequency optimization over time is enabled as trends and patterns are recognized which can provide justification for a frequency change, where the scope is also driven by statutory and regulatory requirements. Another technical advantage of the embodiments may include allowing surveyors to derive the benefits of both the user's use of data analytics and also direct use of data analytics and artificial intelligence by the first party in terms of "vessel-specific survey", as the multi-facet predictive compliance model is structured, specifically within the condition profile facet. Another technical advantage of the embodiments may include determining live risk associated with the actual vessel's sensor and contextual data due to live stream of near real-time sharing of information pertaining to route history, weather and met-ocean exposure, equipment sensor data, hull sensors if installed. Another technical advantage of the embodiments may include determining live risk associated with the actual condition down to the equipment item or structural component level in a vessel hierarchy to actually enable informing a survey scope. Another technical advantage of the embodiments may include determining live risk associated with the effectiveness of the user's maintenance and inspection regimes. Another technical advantage of the embodiments may include determining live risk associated with the effectiveness of the user's quality system and their ability to manage the vessels in question. Another technical advantage of the embodiments may include determining live risk associated with the vessel's performance in terms of fuel consumption and emissions and its ability to meet environmental targets both now and into the future. Another technical advantage of the embodiments may include determining live risk by proxy in terms of how systemic problems on sister vessels can affect the vessel's risk profile as such vessel class related problems are mined from survey findings databased by a state-of-the-art artificial-intelligence and natural-language processing (NLP) driven tagging engine. Certain embodiments disclosed herein may provide none, some, or all of the above technical advantages. One or more other technical advantages may be readily apparent to one skilled in the art in view of the figures, descriptions, and claims of the present disclosure.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

## BRIEF DESCRIPTION OF THE DRAWINGS

FIG. 1 illustrates an example evolution of the class approach.

FIG. 2 illustrate example CBP notation tiers and the services invoked therein based on tier selection.

FIG. 3 illustrates an example data sharing process within the condition-based program.

FIG. 4 illustrates example facets of the predictive compliance model.

FIGS. 5A-5C illustrate an example placement and role of the predictive compliance model.

FIGS. 6A-6B illustrate an example data flow, processing and analysis that produces the risk profile in a traffic-light status for the surveyor's and operator's utilization.

FIG. 7 illustrates an example data flow, processing and analysis of FIG. 6, but only for the structural condition profile.

FIG. 8 illustrates an example generation of a hull/structural condition PCM profile.

FIG. 9 illustrates example user interface showing a customizable weightage table.

FIG. 10 illustrates an example data flow, processing and analysis of FIG. 6, but only for the machinery condition profile.

FIG. 11 illustrates an example generation of machinery condition PCM profile.

FIG. 12 illustrates an example weightage table.

FIGS. 13A-13B illustrate an example global strength assessment critical area risk profile for hull/structural condition PCM.

FIGS. 14A-14B illustrate an example rules-scantling evaluation (RSE) for critical area risk assessment for hull/-structural condition PCM.

FIGS. 15A-15B illustrate an example spectral-based fatigue assessment for risk assessment for hull/structural condition PCM.

FIG. 16 illustrates an example consolidated critical area risk matrix for structures survey plan and survey planning document incorporation for hull/structural condition PCM.

FIG. 17 illustrates an example general format of all PCM spider diagram facet scores.

FIG. 18 illustrates an example PCM lagging factor or factor composite index as leading factors themselves.

FIG. 19 illustrates an example DAG.

FIG. 20 illustrates an example method for analyzing vessel health, performance, and mission readiness.

FIG. 21 illustrates an example computer system.

## DESCRIPTION OF EXAMPLE EMBODIMENTS

Live Risk Analysis Model and Multi-Facet Profile for Improved Vessel Operations and Class Survey

In particular embodiments, a computing system may institutionalize a data-driven and condition-based approach to class survey by establishing an enrollment of a condition-based program (CBP) and sustainment framework based on a range of vessel classification ("class") activities coupled with implementation and sustainment supporting services, models, and tools. The computing system may utilize a predictive compliance model (PCM) which comprises the data, services and tools within the condition-based program and risk profile so they can be utilized by surveyors in the field. The predictive compliance model may enable a practical synthesis of output of these individual services and tools into a new form of risk-profiled class model. Once implemented, embodiments of the condition-based program may leverage the data driven capabilities and associated insights to support vessel owners' or operators' in-service decision-making processes for lifecycle support as well as to support a CBP-driven class survey approach that may decouple the class survey requirements from the traditional calendar-based approach. In particular embodiments, the condition-based program and its supporting predictive compliance model may increase understanding of both vessel condition and class compliance risks associated with a vessel's technical readiness profile (e.g., based on critical hull, machinery and electrical (HM&E) systems in support of maintenance planning and optimization) as well as risk associated with class compliance requirements, management systems, regulatory and statutory regimes, sustainability and fuel/emissions compliance, for marine vessels. Although this disclosure describes utilizing particular models by particular systems for particular analysis of vessels in a particular manner, this disclosure contemplates utilizing any suitable model by any suitable system for any suitable analysis of vessels in any suitable manner.

In particular embodiments, the computing system may access a plurality of data profiles associated with a vessel. The plurality of data profiles may comprise at least a first data profile configured for assessing condition or integrity risks associated with the vessel, a second data profile configured for assessing statutory, regulatory, and port state control, a third data profile configured for assessing quality of one or more management systems, a fourth data profile configured for assessing class trend associated with one or more sister vessels, and a fifth data profile configured for assessing sustainability based on fuel consumption and emissions. In particular embodiments, the computing system may analyze the accessed data profiles by a predictive compliance model configured for quantifying and assessing an overall risk associated with vessels being out of compliance with one or more standards. As an example and not by way of limitation, the predictive compliance model may comprise one or more data models and one or more computational models. In particular embodiments, the computing system may determine, based on the analysis, a class-related risk profiling capability and one or more risks of systems and components associated with the vessel with respect to condition and class compliance. The computing system may further send, to a client system, instructions for presenting the class-related risk profiling capability and the one or more risks of systems and components associated with the vessel with respect to condition and class compliance to a user (e.g., a vessel operator).

With the advent of modern technologies, such as digitalization and data analytics, digital twins, and model-based simulation and the like, it may be possible to enable a new form of classification regime that provides increasing justification for data-driven compliance validation, as well as the potential to de-couple these traditional requirements for survey from the calendar itself, in essence allowing for what is termed in various embodiments as "vessel-specific survey". This type of survey may involve enabling the potential for two aspects of the survey requirements to be optimized. One aspect may include reducing effort for on-board survey crediting of sub-tasks via the use of the model enabled by data sharing. Another aspect may include using a condition-based program (CBP) that is described herein and the models invoked to increasingly justify support for extended period between major availability events such as dry docking for new vessels upon delivery and/or for low-risk operating vessels.

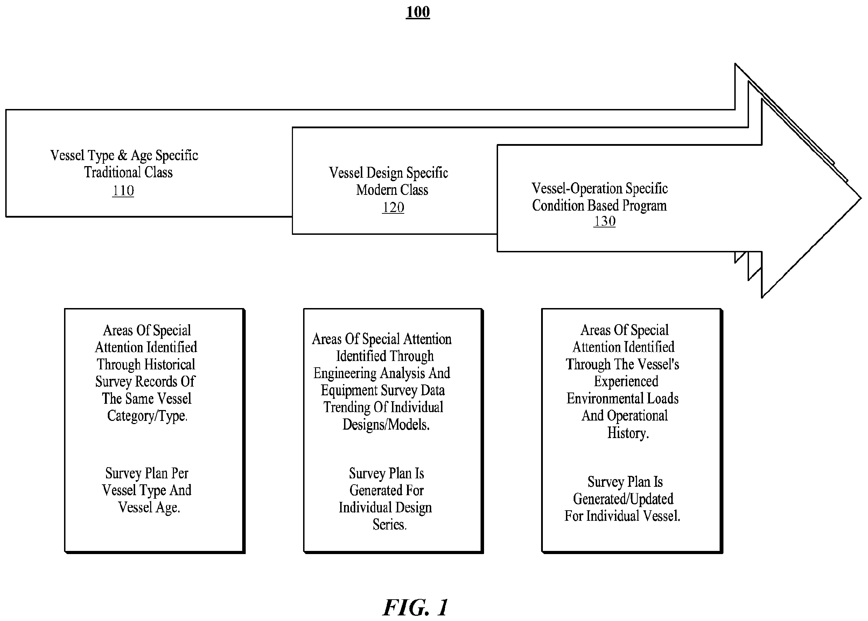

**FIG. 1** illustrates an example evolution 100 of the class approach. As illustrated in FIG. 1, the class approach over the last 100 years may evolve from vessel type and age specific traditional class 110 into vessel design specific modern class 120, and into vessel-operation specific condition-based program 130. In vessel type and age specific traditional class 110, areas of special attention may be identified through historical survey records of the same vessel category/type. A survey plan may be generated per vessel type and vessel age. In vessel design specific modern class 120, areas of special attention may be identified through engineering analysis and equipment survey data trending of individual designs/models. A survey plan may be generated for individual design series. In vessel-operation specific condition-based program 130, areas of special attention may be identified through the vessel's experience environment loads and operational history. A survey plan may be generated/updated for an individual vessel. In particular embodiments, the vessel-operation specific condition-based program 130 may be governed by a predictive compliance model as disclosed herein.

Recent advances in technology, such as sensor hardware, data accumulation/transmission, advanced analysis and artificial intelligence, may have enabled new approaches to vessel health and performance understanding that, when implemented effectively, may improve system safety, and reliability. Vessel operators may have a need for updated life-cycle management approaches to achieve high levels of operational availability and readiness while reducing total ownership costs.

In particular embodiments, the condition-based program (CBP) may leverage design and operational data through a compliance risk model to continually update a vessel-specific CBP survey plan. In particular embodiments, the computing system may generate, based on the analysis, a class survey plan for a condition-based program. As an example and not by way of limitation, the class survey plan may comprise one or more of an annual survey feature, a special survey feature, a remote survey execution plan, a targeted survey time on board, a high-risk system, a high-risk component, or a survey frequency driven by the PCM risk profile.

Traditional class survey requirements may be typically based on the historical performance of vessels of a certain type and age but share only a minimal amount of actual vessel data prior to survey commencement. The CBP survey plan may be kept up to date via data collection and continual re-assessment via the predictive compliance model to deliver live risk insights about the condition of a vessel's critical hull structure, machinery and components. The condition-based program may support a continuous survey process and assist with operational decision-making.

In particular embodiments, enrollment and sustainment of the condition-based program may not only support the crediting process of the class survey, but also assist vessel operators with maintenance and availability planning and continued readiness of their fleet. In particular embodiments, desired outcomes of the condition-based program may include one or more of the following outcomes. One outcome may be operational availability planning, and adherence to vessel time in out of service due to better understanding of anomalies and condition of class prior to a repair campaign or drydock period. In other words, the computing system may generate, based on the analysis, a plan for repair, drydock punchlist, or of operational availability prior to a repair campaign or a drydock period. Another outcome may be flexibility in the prioritization for closure and dispositioning of anomalies and conditions of class while still maintaining vessel readiness. Another outcome may be supporting a shift from highly planned and calendar-based maintenance strategies to a program that comprises predictive and condition-based and/or readiness-based maintenance strategies (e.g., less time-based tasks, spares, and consumables). In particular embodiments, the computing system may support, based on the analysis, a maintenance program comprising one or more of a predictive maintenance strategy, a condition-based maintenance strategy, or a readiness-based maintenance strategy. Another outcome may be detection of the initiation of structural and equipment problems leading to failure, before they impact longevity, to minimize unplanned hull, machinery and electrical (HM&E) failures. In particular embodiments, the computing system may detect, based on the analysis, an initiation of one or more of a hull structural problem or an equipment or system problem. Another outcome may be targeted survey time on board supported by a data-driven process covering both annual/special survey features for the vessel together through a continuous survey process. Another outcome may be reduced crew burden in survey preparation, covering both repair time and supporting data preparation while on-board as well as readiness for remote survey execution. Another outcome may be support of class decisions on extensions and surveys using a continually evolving and informed predictive risk model (expanding and trending data over time for added risk confidence).

In particular embodiments, the condition-based program may provide for a tiered set of class notations that span a range of digital capabilities and supporting services. The condition-based program may establish an enrollment and sustainment framework covered by these notations. This condition-based program and its accompanying guide may provide support to system performance specifications during the design and development phase. The class requirements during the acquisition phase may be covered upon vessel delivery by the optional notations. As an example and not by way of limitation, the notations may be "CBP-ready". The notations may be associated with their respective tiers, e.g., S1, S2 or S3 or M1, M2 or M3. In addition, once operational condition-based program is enabled through a sustainment phase across the operational life-cycle phase, the optional notations "CBP-ready" (and their respective tiers S1, S2 or S3; M1, M2 or M3) may be used for enrolled vessels that comply with the requirements of the condition-based program.

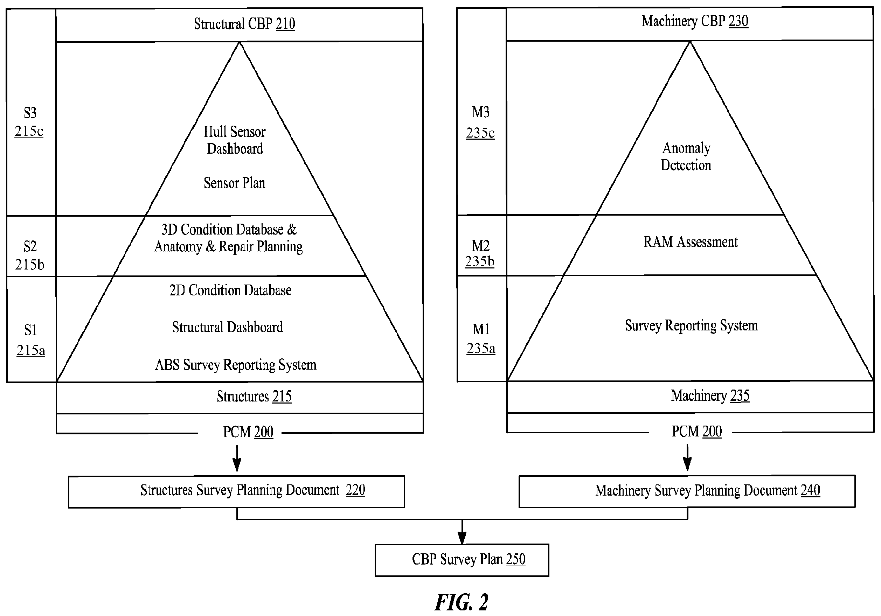

FIG. 2 illustrates example CBP notation tiers and the services invoked therein based on tier selection. FIG. 2 shows the tiered notation contributors to the condition profile facet (one of five individual profiling facets) of the predictive compliance model (PCM) 200. The predictive compliance model 200 may take the structural CBP 210 to generate structures survey planning document 220 and take the machinery CBP 230 to generate machinery survey planning document 240. These two documents may be further utilized to generate a CBP survey plan 250. In particular embodiments, the structural CBP 210 may be based on structures 215 of a vessel. A first tier (S1 215a) of the structural CBP 210 may comprise a 2D condition database, a structural dashboard, and a survey reporting system. A second tier (S2 215b) of the structural CBP 210 may comprise a 3D condition database, anomaly detection, and repair planning. A third tier (S3 215c) of the structural CBP 210 may comprise a hull sensor dashboard aligned to an installed sensor plan. In particular embodiments, the machinery CBP 230 may be based on machinery 235 of the vessel. A first tier (M1 235a) of the machinery CBP 230 may comprise the survey reporting system and a maintenance performance status report. A second tier (M2 235b) of the machinery CBP 230 may comprise reliability, availability and maintainability (RAM) assessment and risk profile. A third tier (M3 235c) of the machinery CBP 230 may comprise anomaly detection for high risk machinery. A higher tier may mean that increasing amounts of data and data fidelity are utilized within the predictive compliance model to produce the CBP survey plan. As a result, the embodiments disclosed herein for higher tiers may have a technical advantage of determining live risk associated with the actual condition down to the equipment item or structural component level in a vessel hierarchy to actually enable informing a survey scope.

In particular embodiments, each CBP tiered notation may expand upon the scope, fidelity, and use of vessel related data, but all tiers may begin with the development of a vessel-specific CBP survey plan that is based upon an initial assessment of vessel structures and machinery.

For the CBP survey plan based on an initial assessment of vessel structures, the condition-based program may utilize finite element analysis (FEA)-based strength and fatigue analysis derived from the design operational profile and previous route history (if applicable) as well as current or as-delivered baseline hull condition. The strength and fatigue assessment may be based on one or more rule requirements. This information may highlight structurally critical areas to be examined with specific scope and frequency, based on a risk categorization.

For the CBP survey plan based on an initial assessment of vessel machinery, the machinery assessment may be conducted via profiling of maintenance and condition data, equipment and system criticality, along with optional reliability, availability and maintainability (RAM) maintenance data analysis and risk profiling for higher chosen tiers. The RAM assessment may also identify critical equipment that could be targeted for data analytics-based anomaly detection. Upon enrollment into the program, CBP sustainment activities may then involve targeted and focused surveys of hull and machinery items via collaborative data sharing and a set of services depending on the tiered notation chosen. The CBP approach may be to receive data prior to survey commencement to optimize the on-board survey effort or to better inform the survey process. Shared data may be then processed by a composite risk profiling approach within the predictive compliance model in order to maintain and update the CBP survey plan of the vessel. The notation tiers may also define the tools and services involved in the condition-based program.

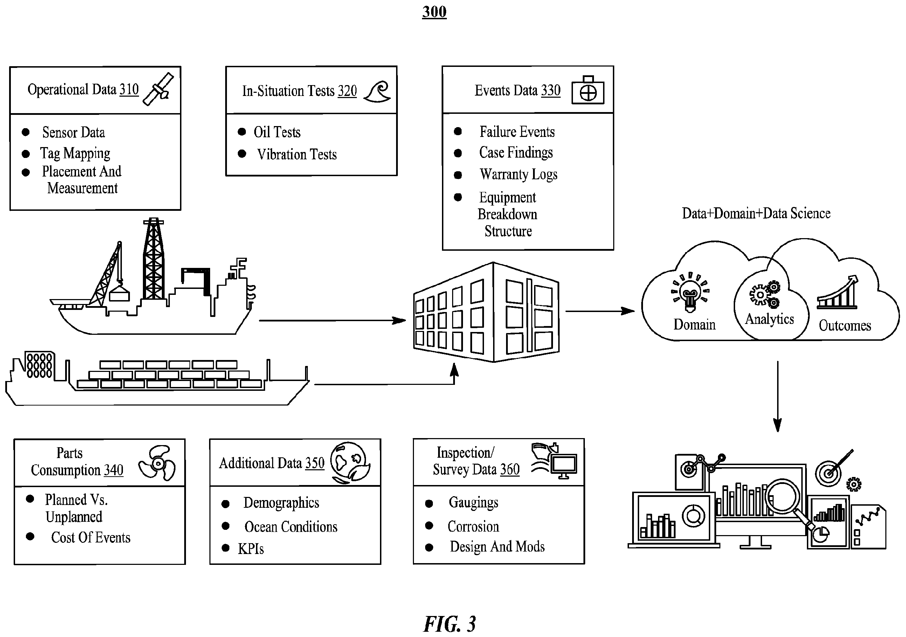

**FIG. 3** illustrates an example data sharing process 300 within the condition-based program. FIG. 3 depicts the modern digital synthesis of typical data sets via connectivity to the cloud and then to the classification society related to the five facets of the predictive compliance model. In particular embodiments, each of the five facets may or may not include analysis, simulation, or weighted numerical models, according to one or more aspects of the present disclosure. As an example and not by way of limitation, the data associated with vessels may comprise operational data 310, in-situation tests 320, events data 330, parts consumption 340, additional data, 350 and inspection/survey data 360. The operational data 310 may comprise sensor data, tag mapping, placement and measurement, etc. The in-situation tests 320 may comprise oil tests and vibration tests, etc. The events data 330 may comprise failure events, case findings, warranty logs, equipment breakdown structure, etc. The parts consumption 340 may comprise planned versus unplanned consumption, cost of events, etc. The additional data 350 may comprise demographics, ocean conditions, key performance indicators (KPIs), etc. The inspection/survey data 360 may comprise thickness measurement gaugings, corrosion, design and mods, etc. These data and their associated domains may be used for analytics to generate outcomes. As a result, the embodiments disclosed herein may have a technical advantage of determining live risk associated with the actual vessel's sensor and contextual data due to live stream of near real-time sharing of information pertaining to route history, weather and met-ocean exposure, equipment sensor data, hull sensors if installed.

*Predictive Compliance Model*

In particular embodiments, the predictive compliance model may be a model-based analysis methodology leveraging inspection, engineering analysis, operational monitoring, and other relevant data accessible to the class society to enable a "class-related risk profiling capability" of the vessel and its system/components with respect to condition and class compliance.

In embodiments, the condition-based program may explore condition related data trends for a vessel with the provision of quantification as to justification for class surveys to move "off the calendar" and into a justified condition-based approach for execution of required class and statutory survey scope and frequency. The predictive compliance model may aggregate a plurality of digital and engineering models, tools, and services applied to the various transactional, time-series, and contextual data sets being received, processed and analyzed as part of the condition-based program.

In particular embodiments, the predictive compliance model may support condition-based decision-making across a variety of market sectors and use cases, specifically government operations, commercial shipping sector, and the offshore oil and gas sector.

In particular embodiments, the predictive compliance model may leverage all forms of data within a weighted multi-factor model that is used to profile a vessel and its system/components compliance related risk. As an example and not by way of limitation, the data may comprise user data sets, first-party data sets, and contextual data sets.

In particular embodiments, the profiles associated with a vessel may cover a plurality of individual risk profile facets that yield insight into the health state of the vessel and the operator's competency in managing all aspects of vessel operations. One facet may be a condition profile. This profile may be the most robust and comprehensive facet of the predictive compliance model as it may be directly related to vessel condition, load exposure, machinery systems and health state, maintenance effectiveness, and system reliability, all of which may drive the inspection and maintenance planning for the vessel, and which may be monitored via the use of various models, analyses, digital twins, and data analytics within the condition-based program. Generating the multi-facet profile based on a condition profile may be an effective solution for addressing the technical challenge of utilizing constantly refreshed and analyzed multi-facet profile of a vessel as the condition profile includes a deep dive down to the vessel's systems and their components using live data from the vessel itself with a set of models and tools that assess condition or integrity risk.

Another facet may be a profile for statutory, regulatory, and port state control. Another facet may be a profile for integrated ship management (ISM)/management system quality. These two facets may be comprised of weighted factors that tally up into a risk profile/score from various public and first-party data collected and stored historically related to port state, statutory and class findings, non-conformances, open and closed conditions of class, and the like for approximately 100 categories of data.

Another facet may be a profile for sister vessel class trend. This facet may cover risk exposure profiles from sister vessels via a natural-language processing (NLP) assisted and artificial-intelligence (AI) tagged data set from first-party survey findings (vessels built to the same design series and class) that may infer similar risk to the vessel in question as a systemic risk trend for the series. Generating the multi-facet profile based on performance, management system effectiveness, statutory and regulatory risk, and also its sister vessels' risk profiles may be another effective solution for addressing the technical challenge of utilizing constantly refreshed and analyzed multi-facet profile of a vessel as this comprehensiveness may provide for the most comprehensive profile of a vessel's compliance state and the operator's ability to manage that vessel without incident. Furthermore, the embodiments disclosed herein may have a technical advantage of determining live risk by proxy in terms of how systemic problems on sister vessels can affect the vessel's risk profile as such vessel class related problems are mined from survey findings databased by a state-of-the-art artificial-intelligence and natural-language processing (NLP) driven tagging engine.

Another facet may be a sustainability profile. This facet may cover reported fuel consumption and emissions related to sustainability targets currently and in future and the vessel's current and future ability to meet those targets. In particular embodiments, data utilized within this facet may derive from an emissions reporter portal service which is a software tool that automatically verifies compliance with operator reported fuel consumption and emissions for a vessel with the applicable requirements. As an example and not by way of limitation, these requirements may be from the International Maritime Organization (IMO) data collection system (DCS) (I), European Monitoring, Reporting and Verification (MRV), and UK MRV. Generating the multi-facet profile based on environmental and sustainability performance that coupled with the condition and compliance risk profiles may be another effective solution for addressing the technical challenge of utilizing constantly refreshed and analyzed multi-facet profile of a vessel as they may provide for a state-of-the-art vessel risk profile that is comprehensive enough to challenge rigid calendar-based class and statutory regimes. Furthermore, the embodiments disclosed herein may have a technical advantage of determining live risk associated with the vessel's performance in terms of fuel consumption and emissions and its ability to meet environmental targets both now and into the future.

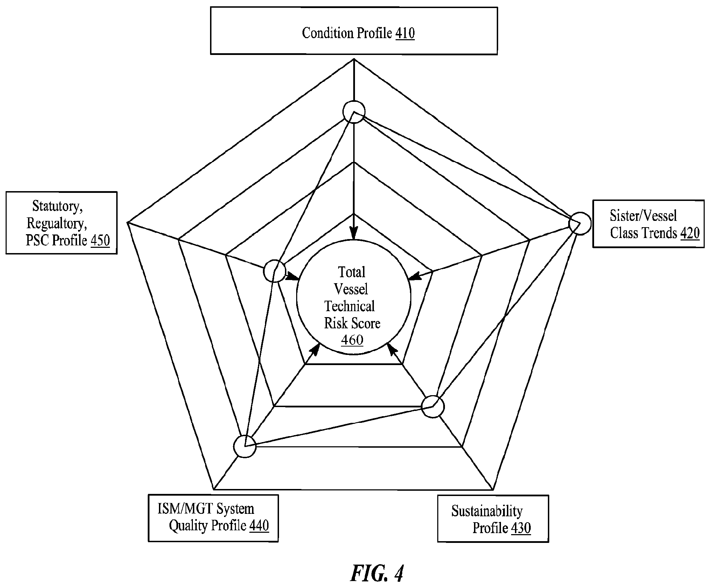

**FIG. 4** illustrates example facets of the predictive compliance model. The five facets of the predictive compliance model, as illustrated in FIG. 4, cover vessel condition profile 410 tied to services via CBP notation tiers, sister vessel class trends 420, sustainability profile 430, integrated ship management (ISM) and management systems quality profile 440, and statutory/regulatory and Port State Control (PSC) profile 450, according to one or more aspects of the present disclosure. The predictive compliance model may utilize these facets to generate a total vessel technical risk score 460.

In particular embodiments, each of the plurality of data profiles may comprise one or more lagging and one or more leading factors. Each of the one or more lagging factors may be associated with a respective weight. Each of the one or more leading factors may be associated with a respective weight. In particular embodiments, the class-related risk profiling capability may comprise an overall vessel risk score. Each PCM facet score may contribute weight to an overall vessel risk score. In other words, each of the plurality of data profiles may be associated with a respective profile score, and the overall vessel risk score may be determined on the plurality of profile scores associated with the plurality of data profiles.

In particular embodiments, the condition profile of the predictive compliance model may utilize inspection and maintenance data, data analytics, engineering analysis, and operational monitoring, to enable a "risk profiling capability" for the vessel in question. In particular embodiments, the computing system may generate the first data profile (condition profile) based on one or more of transactional data, time-series sensor data, or contextual data.

In particular embodiments, the computing system may access, by the predictive compliance model, one or more indicators comprising one or more of a first indicator for predictive condition, a second indicator for damage exposure, a lagging factor, or a leading factor. In particular embodiments, determining the class-related risk profiling capability and the one or more risks of systems and components associated with the vessel with respect to condition and class compliance may be further based on the one or more indicators.

In particular embodiments, the predictive compliance model may assess the current condition or compliance state with respect to applicable class and statutory criteria, which may be considered as things that have already happened, i.e., "lagging factors". When available, the predictive compliance model may also utilize predictive condition degradation and damage exposure indicators as well as lagging indicators trended as leading indicators to evaluate the projected risk of being out-of-class-compliance, which may be considered as things that might happen in the future given the indications, i.e., "leading factors". The predictive compliance model may identify risks to the vessel and its systems and components to assist targeted inspection and survey. The predictive compliance model may also benchmark the vessel amongst a vessel class or a fleet and find the potential "bad actors" for targeted survey. In particular embodiments, the computing system may generate, based on the analysis, a class survey plan for a condition-based program. The computing system may then benchmark the vessel amongst a vessel class or a fleet comprising a plurality of vessels. The computing system may further determine one or more vessels among the vessel class or the fleet as one or more targets for the class survey plan. When risk profiles warrant consideration, the predictive compliance model may not only support condition-based survey but also support class-type decisions on survey crediting and granting extensions to survey windows (e.g., support a decision for a dry-dock extension). In particular embodiments, the computing system may determine one or more class types on survey crediting for the class survey plan. The computing system may also determine one or more extensions to one or more survey windows associated with the class survey plan.

In particular embodiments, the PCM condition profile may facilitate a new approach to survey after construction as part of the condition-based program. The predictive compliance model may facilitate survey optimization and survey risk reduction. While traditional and statutory survey requirements may remain in place following receipt of a CBP notation, CBP efforts via its data sharing component into the predictive compliance model may enable the increased use of such data to support pre-planning for both traditional surveys as well as the ability to conduct "remote" surveys. In particular embodiments, the predictive compliance model may take the multiple inputs from the above services and tools and apply them within a weighted set of lagging/leading indicators, to make the aggregation easy to focus and optimize a surveyor's time on board. The predictive compliance model employed within the condition-based program may play a key role in the focusing of a survey plan and its prioritization by making the above aggregation presented to a surveyor in a simple-to-use traffic-light risk categorization.

As a result, the embodiments disclosed herein may have a technical advantage of allowing surveyors to derive the benefits of both the user's use of data analytics and also direct use of data analytics and artificial intelligence by the first party in terms of "vessel-specific survey", as the multi-facet predictive compliance model is structured, specifically within the condition profile facet.

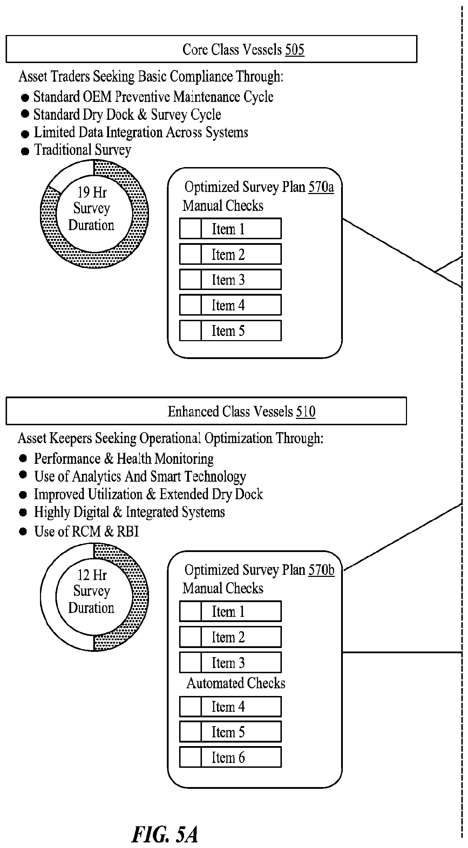

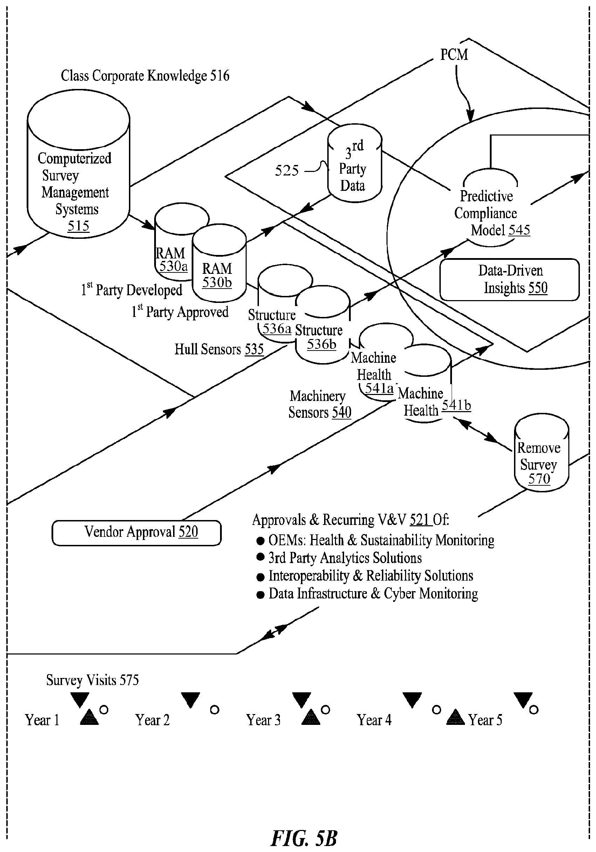

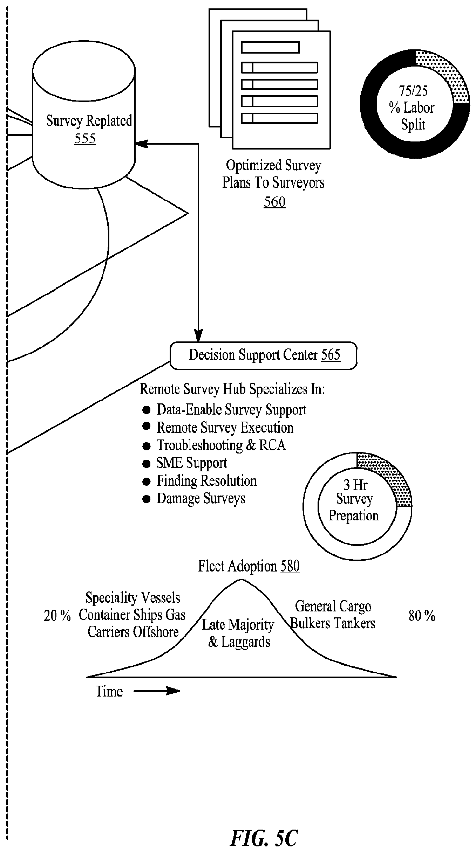

**FIGS. 5A-5C** illustrate an example placement and role of the predictive compliance model. The example placement and role may be depicted as the predictive compliance model contributes to the synthesis of various data sets via connectivity to the cloud and then to the enterprise data infrastructure related to the facets of the predictive compliance model, each of which may or may not include analysis, simulation, or weighted numerical models, according to one or more aspects of the present disclosure. As illustrated in FIG. 5A, vessels may comprise core class vessels 505 and enhanced class vessels 510. For core class vessels 505, asset traders may seek basic compliance through standard OEM preventative maintenance cycle, standard dry dock and survey cycles, limited data integration across systems, and traditional survey. For enhanced class vessels 510, asset keepers may seek operational optimization through performance and health monitoring, use of analytics and smart technology, improved utilization and extended dry dock, highly digital and integrated systems, and the use of reliability centered maintenance (RCM) and risk based inspection (RBI) study techniques.

Data associated with core class vessels 505 may be input to computerized survey management systems 515, which may generate class corporate knowledge 516, including fleetwide benchmarking to understand risks by vessel types, classes, configuration, and operations. Vendor approval 520 may be required for generating data associated with machinery sensors of enhanced class vessel 510. Vendor approval 520 may result in approvals and recurring vendor verifications 521 of OEMs (health and sustainability monitoring), third-party analytics solutions, interoperability and reliability solutions, and data infrastructure and cyber monitoring. Data associated with enhanced class vessels 510 may be also input to the computerized survey management systems 515. The output from the computerized maintenance systems 515, together with third-party data 525, first-party developed reliability, availability and maintainability (RAM) 530a, first-party approved RAM 530b, structures 536 associated with hull sensors 535, and machine health 541 determined from machinery sensors 540 may be provided to the predictive compliance model 545. Based the data-driven insights 550, the predictive compliance model 545 may generate survey replated 555 (conditions of class), which may further form optimized survey plans to surveyors 560 for a decision support center 565. The decision support center 565 may comprise a remote survey hub specializing in data-enabled survey support, remote survey execution, troubleshooting and root cause analysis (RCA), subject matter expert (SME) support, finding resolution, and damage surveys. The decision support center 565 may generate a remote survey 570, which may be then applied to machine health 54a and enhanced class vessels 510.

With the output and support of the decision support center 565, a surveyor may only utilize 3 hours of support center support to prepare for a survey and eliminate on-board tasks. Based on the optimized survey plan 570, the survey duration may be up to 19 hours for core class vessels 505 and only up to 12 hours for enhanced class vessels 510. The labor spit between the surveyors and the decision support center 565 may be 75 to 25.

Based on the optimized survey plans 570, survey visits 575 may be required for year 1, year 2, year 3, year 4, and year 5 for core class vessels 505 but only for year 1, year 3, and year 5 for enhanced class vessels 510. In particular embodiments, the computing system may further determine fleet adoption rates 580 based on late majority and laggards in terms of industry readiness for such approaches. 20% of such adoption may comprise specialty vessels, container ships, gas carriers, and offshore while the lagging 80% may comprise general cargo, bulkers, and tankers.

As can be seen, the embodiments disclosed herein may have a technical advantage of facilitating both survey optimization and survey risk reduction by targeting data-driven crediting of aspects of the scope down to the system and equipment level of granularity, as well as the frequency of larger downtime driven events as risk optimization with the assurance that items that are of high risk to any compliance facet are paid enhanced scrutiny while also considering their limited time on board, scope optimization via risk profiling allows focus on high-risk items and less emphasis on low risk while covering the required scope within a highly constrained time window to cover the entire scope of the survey in question, and frequency optimization over time is enabled as trends and patterns are recognized which can provide justification for a frequency change, where the scope is also driven by statutory and regulatory requirements.

In particular embodiments, the "CBP-ready" or CBP (S1, S2 or S3) or "CBP-ready" or CBP (M1, M2 or M3 by system) notations may indicate that the hull or individual system(s) have achieved CBP enrollment and PCM capabilities in line with one or more of the following CBP tiers. Tier 1, denoted by S 1 and/or M1, may indicate entry-level requirements for CBP enrollment. Transactional data and route or exposure-based sea-state history may be leveraged for analysis and creation of vessel-specific CBP survey plans. Based on a survey reporting system, the annual survey assessments may include a focused effort on structural critical areas and machinery identified via the predictive compliance model as high or medium risk primarily through lagging indicators on the system aspects, but also including some structural leading indicators via a continually finite element-based reassessment of hull critical areas and a weather and sea-state route exposure structural dashboard alert system.

Tier 2, denoted by S2 and/or M2), may involve a higher fidelity of transactional data analysis utilization in the predictive compliance model, via the inclusion of model-based structural condition tracking and degradation forecasting, and increased use of leading indicators for machinery reliability emergent risk identification (i.e., reliability, availability and maintainability, or RAM). The higher-fidelity 3D condition model may be deployed to complement the route or exposure-based sea-state history tracking, and to support anomaly management, maintenance/repair, and drydock/availability planning.

Tier 3, denoted by S3 and/or M3, may introduce the use of time-series sensor data for enhanced PCM use. Alerts from either hull sensor or machinery anomaly detection for system monitoring may serve as added leading indicator inputs to the predictive compliance model, further informing survey planning. In addition, hull sensor full-scale measurements may enable structural digital twin calibration for improved accuracy and reliability of the continual structural reassessments involved in the sustainability phase.

In particular embodiments, the data-driven process of the condition-based program facilitated by the PCM condition profile facet may comprise four distinct stages to provide data-driven insights. The process may continually provide an up-to-date understanding of vessel condition, performance and compliance risk, resulting in a vessel specific CBP survey plan. The CBP survey plan may be a key program component and define the scope and prioritization of all survey assessments with detailed information regarding hull, machinery and electrical (HM&E) and compliance risks, derived from the various PCM facets.

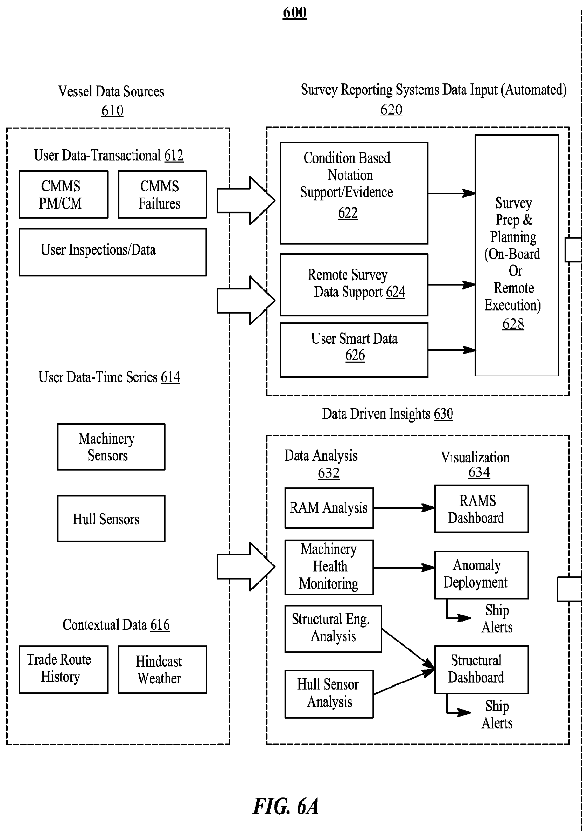

FIGS. 6A-6B illustrate an example data flow, processing and analysis 600 that produces the risk profile in a traffic-light status for the surveyor's and operator's utilization. Vessel data sources 610 may comprise transactional user data 612, time-series user data 614, and contextual data 616. For example, transactional data 612 may comprise computerized maintenance management system (CMMS) planned maintenance/condition monitoring, CMMS failures, and user inspections/data. As another example, time-series data 614 may comprise machinery sensors and hull sensors. As yet another example, contextual data 616 may comprise trade route history and hindcast weather. The vessel data sources may be used to generate freedom data input 620 in an automated manner. The survey reporting systems data input 620 may comprise condition-based notation support/evidence 622 (e.g., preventative maintenance program, smart, risk based inspection (RBI) studies, reliability centered maintenance (RCM) studies, etc.), remote survey data support 624, and user smart data 626 comprising analytics or digital twin. Condition-based notation support/evidence 622, remote survey data support 624, and user smart data 626 may be used for survey preparation and planning 628 (on-board or remote execution). The vessel data sources 610 may be also used to generate data driven insights 630. The data drive insights 630 may comprise data analysis 632 and visualization 634. The data analysis 632 may comprise reliability, availability and maintainability (RAM) analysis visualized in a machinery dashboard, machinery health monitoring visualized in anomaly deployment, and structure engineering analysis and hull sensor analysis visualized in structural dashboard. The anomaly deployment and structural dashboard may then generate ship alerts.

The computing system may further generate survey reporting system virtual vessel 640 based on the freedom data input 620 and data driven insights 630. The survey reporting virtual vessel 640 may comprise freedom 3D data model layer 641, freedom SIM (simulation) model(s) 642 (IoT), freedom 3D point cloud spatial layer 643, freedom 3D photogrammetry layer 644, freedom vessel survey planning document (SPD) and PCM driven survey plan 645, and freedom reporting tool, smart scheduler, and survey process 646. The computing system may further generate outcomes 650 based on the freedom virtual vessel 640. The outcomes 650 may comprise data enabled virtual twin 652, survey plan 654, and optimal user maintenance 656 via user CMMS.

In particular embodiments, the condition-based program may comprise the following stages. Stage 1 may be data acquisition. This stage may involve the ingestion of data in all its forms. Transactional data (e.g., preventative maintenance system (PMS) records, failure events, in-situ test results, etc.) or sensor time-series data (e.g., data historian logs and similar) may be collected and ingested into a user portal, either by secure application program interface (API) gateway (structured reports) or via a secure cloud platform. Further explanations of transactional and time-series data are provided below.

In particular embodiments, transactional data may involve data coming to the first or third parties that have been summarized and reported upon to cover a period of time or a snapshot in time as part of a first-party program, often via a third-party recognized service supplier. Typically, third-party processed data may come in the form of "traffic light" status reports which summarize the maintenance status, health or condition state, as well as corrective actions taken by the technical authority to correct deficient states. As an example and not by way of limitation, this type of report may include planned maintenance associated with a preventative maintenance program, condition monitoring, or smart function reports. The data within such reports may be also utilized to inform the PCM condition profile.

In particular embodiments, time-series data may be utilized only for ingestion and analysis within higher-tier CBP components. These components may ingest sensor data from either systems or machines (typically the operational sensors that are part of the original equipment manufacturer (OEM) or a builder package) or structures (typically in the form of a hull sensor set purpose installed to better understand of vessel global responses to hull loading). Once analyzed, such data may provide enhanced vessel condition risk profiling to support survey planning as well as to provide ship alerts to the operator for action.

In particular embodiments, contextual data may comprise both vessel route history in the form of vessel operational or position history as well as the corresponding met-ocean hindcast data sets to support the aggregation of a route and sea-state load history that can be utilized to reassess the vessel based on its service history over time before every drydock event to enhance the survey planning aspect.

Stage 2 may be data processing and analysis. Data processing and analysis may cover the following activities, as applicable to the chosen tier. One activity may include ingestion and appropriate mapping of information to the CBP tier component, as applicable. Another activity may include ingested system data processing, including data quality and verification that ingested data meets the minimum required fidelity for follow-on analytics. Data quality may be monitored and reported to quickly identify and notify the operator of potential issues in the data collection process (e.g., failing sensors, etc.). Another activity may include analytical models that provide predictive compliance-related forecasting abilities, which inform the condition-based program and condition-based maintenance activities. This may include reliability, availability and maintainability (RAM) or anomaly detection models used to identify reliability risks enabling prioritized survey or maintenance prioritization for the operator or a structural analysis accounting for initial design envelope and as-built configuration and all continued reassessments based on load exposure and fatigue damage rate estimation as well as any changes in condition associated with degradation or repair/restoration.

Stage 3 may be visualization and risk profile. This stage may cover the visualization of all inputs from tier components for CBP survey execution. The inputs may include a vessel specific CBP survey plan for structures, as informed by the structural analysis and the current/updated PCM profile. The inputs may also include a vessel specific CBP survey plan for machinery, as informed by the CBP supporting program data, and the predictive insights from the selected tier components as well as the current/updated PCM profile. The input may further include high-level and detailed condition data for the hull structures as shown in both a survey reporting system and a three-dimensional (3D) condition model to support drydock or availability and repair planning, if applicable to the selected tier.

Stage 4 may be survey execution. Stage 4 may cover the output of either the CBP survey activity itself or CBP services providing alerts to the technical authority's computerized maintenance management system (CMMS) for their own repair, maintenance, survey, and drydock or availability planning. As a result, the embodiments disclosed herein may have a technical advantage of determining live risk associated with the effectiveness of the user's maintenance and inspection regimes and a technical advantage of determining live risk associated with the effectiveness of the user's quality system and their ability to manage the vessels in question.

In particular embodiments, the PCM condition profile may be not indicative of literal compliance or non-compliance. Rather, it may identify those hull, machinery and electrical (HM&E) systems and components determined to be at higher risk of being non-compliant with respect to condition degradation, the presence of anomalies, or maintenance status. For this fact, the predictive compliance model may be used as the means to inform survey scope and prioritization via the CBP survey plan.

In particular embodiments, the computing system may determine, based on the first data profile and the one or more lagging factors associated with the first data profile, a current condition of a hull or a machinery associated with the vessel with respect to one or more class and statutory requirements. The computing system may also determine, based on the first data profile and the one or more leading factors associated with the first data profile, a condition degradation of an asset associated with the vessel to evaluate. The predictive compliance model may be deployed within the condition-based program to assess the current condition/readiness of the hull and machinery with respect to applicable class and statutory requirements via a set of lagging factors. The predictive compliance model may be deployed within the condition-based program to also forecast the degradation of an asset's condition to evaluate via a set of leading factors and thus the future risk of the vessel's non-compliance. The predictive compliance model may be deployed within the condition-based program to additionally identify and prioritize maintenance and survey activity with respect to drydock and availability planning, and crediting of items towards special continuous survey of hull and machinery. The predictive compliance model may be deployed within the condition-based program to further identify opportunities for aligning operator's maintenance activities with class compliance activities to improve vessel readiness and reliability. In particular embodiments, the computing system may align one or more maintenance activities by an operator of the vessel with one or more class compliance activities.

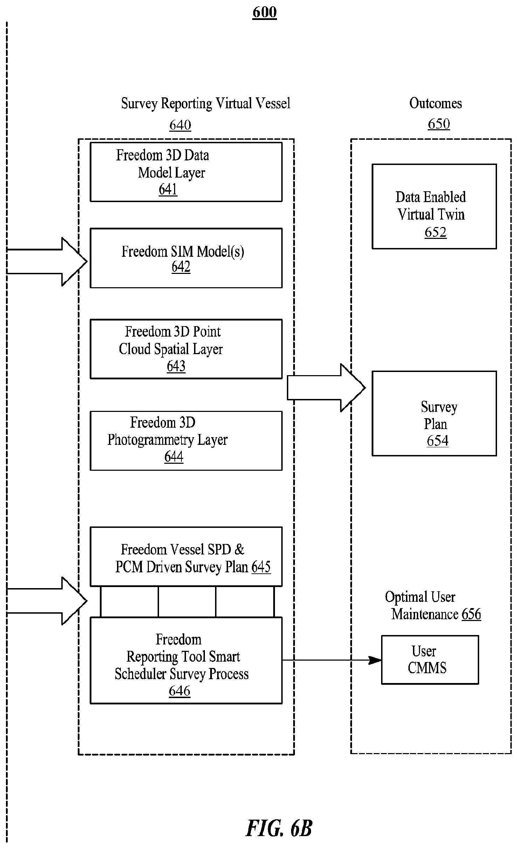

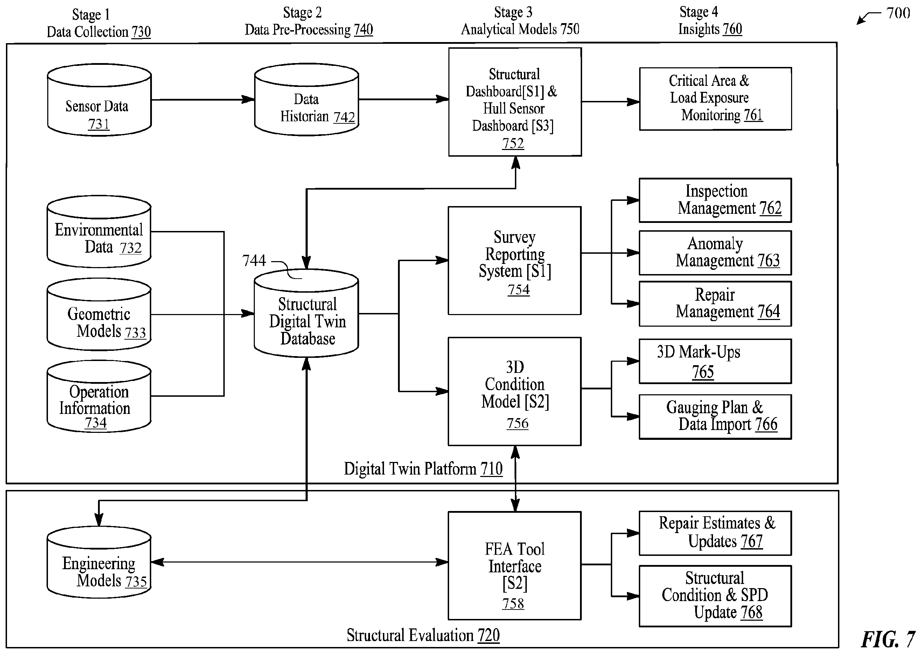

In particular embodiments, for structures of the PCM condition profile, a computing system may utilize various data inputs to generate a PCM score, utilizing a variety of criteria, as applicable. **FIG. 7** illustrates an example data flow, processing and analysis 700 of FIG. 6, but only for the structural condition profile. FIG. 7 shows some criteria that may be used to generate the PCM score. For hull, S1 may indicate vessel-specific survey plan based on dynamic loading approach (DLA) / spectral-based fatigue analysis (SFA) and historical anomalies, route history utilized for structural dashboard, and hull inspection and maintenance program (HIMP) grading criteria for survey. S2 may indicate adding a 3D condition model (called Hull Manager 3D, for condition model fidelity, trending, and availability planning). S3 may indicate adding hull sensor plan and dashboard and direct hull monitoring with structural analysis calibration. The example data flow 700 may comprise four stages based on a digital twin platform 710 and structural evaluation 720. Stage 1 may include data collection 730 of sensor data 731, environmental data 732, geometric models 733, operation information 734, and engineering models 735. Stage 2 may include data pre-processing 740. Sensor data 731 may be pre-processed into data historian 742. Environmental data 732, geometric models 733, operation information 734, and engineering models 735 may be pre-processed into structural digital twin database 744. Stage 3 may include analytical models 750. Data historian 742 and structural digital twin database 744 may be accessed by structural dashboard (for S1) and hull sensor dashboard (for S3) 752. Structural digital twin database 744 and 3D condition model (for S2) 756 may be also accessed by survey reporting system (for S1) 754. The engineering models 735 may be accessed by finite element analysis (FEA) tool interface (for S2) 758. Stage 4 may include insights 760. The structural dashboard and hull sensor dashboard 752 may provide input to critical area and load exposure monitoring 761. The survey reporting system 754 may provide input to inspection management 762, anomaly management 763, and repair management 764. The 3D condition model 756 may provide input to 3D mark-ups 765 (critical area, findings, and repairs) and gauging plan and data import 766. The FEA tool interface 758 may provide input to repair estimates and updates 767 and structural condition and survey planning document (SPD) update 768.

In particular embodiments, the computing system may generate, for the first data profile, a structural score based on one or more criteria comprising one or more of a scaled grading set of criteria based on condition severity for a plurality of categories of condition, a strength critical area, a fatigue critical area, or a structural alert. In particular embodiments, the plurality of categories of condition may comprise one or more of coating, corrosion, pitting and grooving, fractures, deformation, or cleanness. As an example and not by way of limitation, a scaled grading set of criteria based on condition severity from 0 to 6 for six separate categories of condition, e.g., a criteria associated with a hull inspection and maintenance program (HIMP). Reporting may be completed by a surveyor as the surveys are carried out. As another example and not by way of limitation, in strength and fatigue critical areas, refresh of the critical area (CA) profiles at completion of initial and subsequent updates to the strength and fatigue analyses may be used. As yet another example and not by way of limitation, the criteria may include structural alerts. Structural dashboard alerts may cover load exposure and thresholding limits received from the aggregated route and met-ocean data correlated to vessel response, as well as sensor threshold limits for any directly monitored locations, if the vessel has such capability tier.

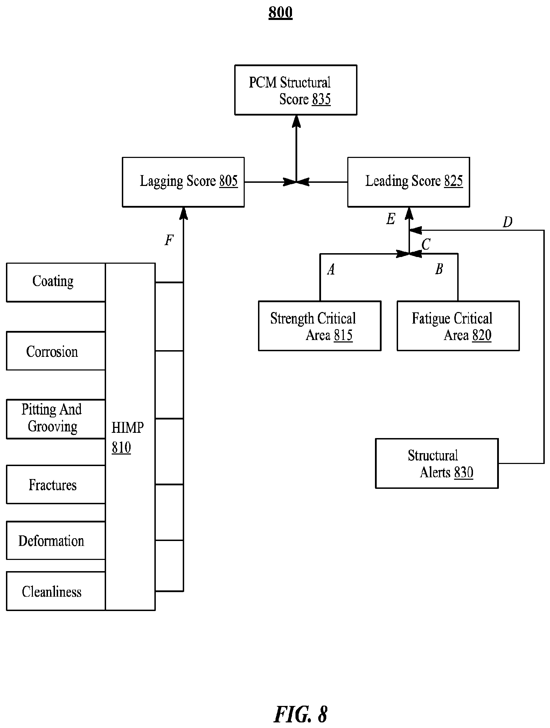

FIG. 8 illustrates an example generation 800 of a hull/structural condition PCM profile. *F* indicates that based on a grading table logic, a condition manager may automatically calculate a lagging score 805 utilizing a weightage table. The calculation may be based on hull inspection and maintenance program (HIMP) criteria 810 including coating, corrosion, pitting and grooving, fractures, deformation, and cleanliness. For the HIMP criteria 810, a surveyor may be responsible for entry of data, with HIMP guideline and surveyor process instruction to be followed for scoring. All compartments may have HIMP data entered during baseline. Some selected compartments may have HIMP data entered during annuals/intermediates. In particular embodiments, data of HIMP criterial 810 may be manually entered in the survey reporting program. In particular embodiments, integration with the survey reporting tool will be utilized for data entry.

For strength critical area 815, the first-party engineering may be responsible for entry of data (as indicated by *A*), with engineering process instruction to be followed for scoring. For fatigue critical area 820, the first-party engineering may be responsible for entry of data (as indicated by *B*), with engineering process instruction to be followed for scoring. Data may be updated at the completion of each structural analysis. This schedule may be governed by vessel type, age, and preference of the second party. As an example and not by way of limitation, the schedule may be approximately after each time new thickness measurement gaugings are taken. Data may be manually entered into the 2D and 3D condition databases. In particular embodiments, leading scores 825 based on engineering analysis criteria in strength critical area 815 and fatigue critical area 820 may be manually entered by the first-party engineering in the 2D and 3D condition databases. The databases may then automatically choose the worse score between these two entered scores (i.e., *A* and *B*), as indicated by *C.* This score may represent the score for critical areas.

For structural alerts 830, the first-party technology may be responsible for monitoring sensor data. The structural dashboard may receive real-time hull sensor data. Alerts from the dashboard may be then exported to the survey reporting tool. The first-party technology may be responsible for dispositioning of alerts and creation of anomalies within the condition manager. *D* represents quantity of open alerts within the survey reporting tool. The presence of alerts may increase (make worse) the leading score 825 by one point. As indicated by *E,* the survey reporting tool may lower *C* for each alert at *D.* In other words, a score of 3 for *C,* and quantity of 1 for *D,* may generate a score of 4 for *E.* 4 may be the lowest score allowed. As may be seen, *E* may be the leading score 825.

The lagging score 805 and leading score 825 may then be used to generate the PCM structural score 835. As an example and not by way of limitation, the top score may include from 0 to 2 (inclusive of 2), greater than 2 to 4 (inclusive of 4), and greater than 4 to 6 (inclusive of 6). The top score may be by compartment. In particular embodiments, the field of the structural PCM score 835 may be colored coded, e.g., red (greater than 4 to 6), yellow (greater than 2 to 4), or green (0 to 2 inclusive) based on score (which is on a 0-6 scale). In particular embodiments, the PCM structural score 835 may be calculated using the scoring from the last approved inspection for the compartment. The PCM structural score 835 may be the lagging score 805 plus the leading score 825. In particular embodiments, the computing system may utilize compartment weighting for survey plan, e.g., 65% lagging and 35% leading. As a result, the lagging score 805 weighted 65% of the compartment's weighted average score from the last approved inspection may be used for the first part of the calculation. The leading score 825 weighted 35% of the total score may be used for the second part of the calculation.

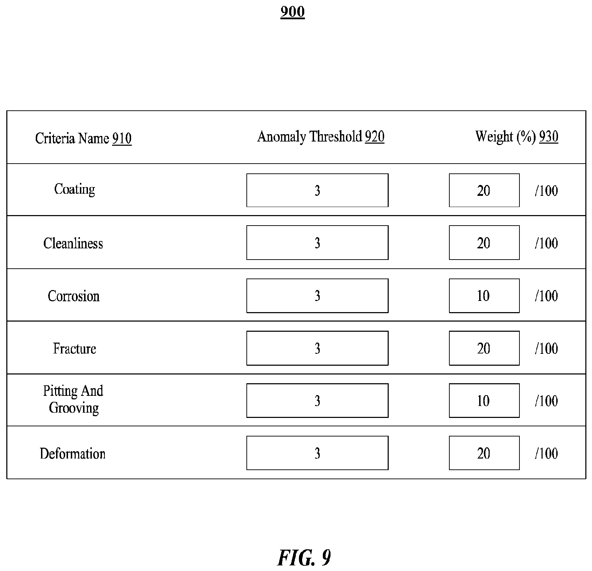

**FIG. 9** illustrates example user interface showing a customizable weightage table 900. The weightage table 900 may comprise criteria name 910, anomaly threshold 920, and weight (%) 930. As illustrated in FIG. 9, a user may customize the anomaly threshold 920 as 3 for each of the six categories. Coating, cleanliness, fracture, and deformation may have a weight 930 of 20% whereas the other two categories may have a weight of 10%, which may be configured by the user. Although FIG. 9 illustrates a particular example user interface for customizing a particular example weightage table, this disclosure contemplates any suitable user interface for customizing any suitable weightage table in any suitable manner.

In particular embodiments, critical area scores may be based on a risk score value of 1 to 4. 1 may indicate low risk, 2 may indicate medium low risk. 3 may indicate medium high risk. 4 may indicate high risk. The computing system may review strength critical area score and fatigue critical area score for all critical areas associated to the compartment and then take the max value of the two fields. For structural dashboard alerts, the computing system may count up all open and new alerts that have been received for compartment. Then the computing system may use the worst case of the strength critical areas and fatigue critical areas. The alert numbers may increase the number by one for each alert received for the compartment. However, the maximum number for this function may be 4. As a result, if the risk score is 4, the number of alerts may have no impact. If critical area worst case score is 2 and there is 1 alert, the leading score may be now 3.

An example calculation may be as follows. In particular embodiments, strength critical area and fatigue critical area may be defied for each compartment/zone. The lagging score based on the compartment's weighted average score may be 1.77. The leading score based on the max score for strength and fatigue critical area score may be 3. The number of alerts in the structural dashboard may be 2, which may increase the max score by 2 to make it 5. However, as described above, the leading score can never be higher than 4 so the lead score is now 4. The PCM score is then calculated as (1.77*65%)+(4*35%)=1.1505+1.4=2.5505. Hence, the PCM score is 2.6, which may be a color code of yellow.

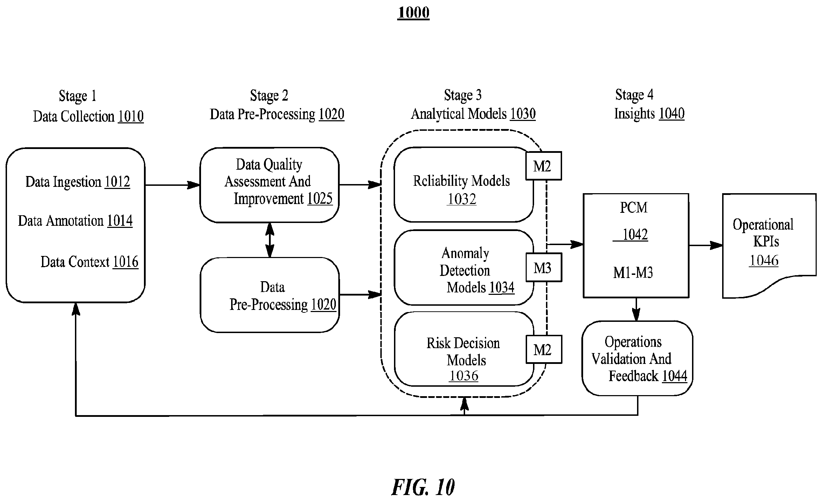

In particular embodiments, each compartment leading and lagging score may roll up to a single PCM score for that compartment. This score may be displayed in both the survey reporting system and the PCM risk profiled survey plan. **FIG. 10** illustrates an example data flow, processing and analysis 1000 of FIG. 6, but only for the machinery condition profile. For machinery, M1 may indicate "lagging" factors, transactional data such as preventative maintenance program for planned maintenance, condition monitoring, smart functions, and conditions of class. M2 may indicate "leading" factor inputs to the predictive compliance model (reliability availability maintainability study, emergent risk, etc.). M3 may indicate predictive capabilities using time-series data as "leading" factors to the predictive compliance model (anomaly detection). The example data flow 1000 may comprise four stages. Stage 1 may include data collection 1010 comprising data ingestion 1012, data annotation 1014, and data context 1016. Stage 2 may include data pre-processing 1020. The collected data from stage 1 may go through data quality assessment and improvement 1025 as part of the data pre-processing 1020. Stage 3 may include analytical models 1030, comprising reliability models 1032 for M2, anomaly detection models 1034 for M3, and risk decision models 1036 for M2. Stage 4 may include insights 1040, which may comprise PCM insights 1042 for M1 to M3. The PCM insights 1042 may be used for operations validation and feedback 1044, and operational KPIs 1046.

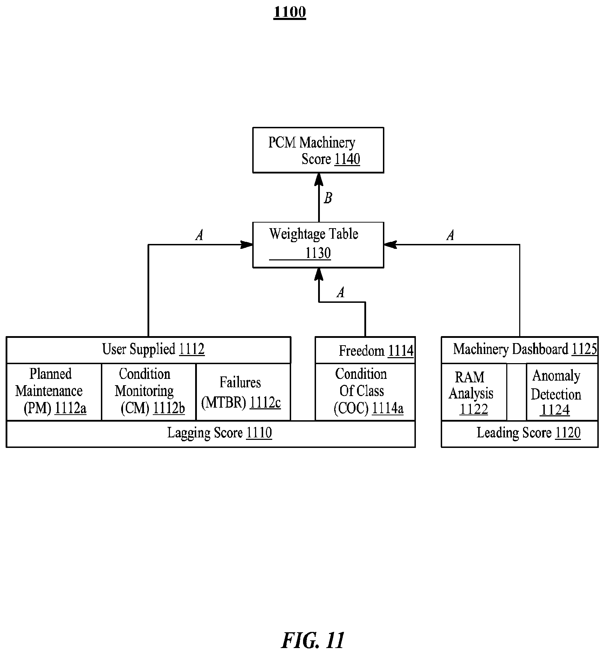

**FIG. 11** illustrates an example generation 1100 of machinery condition PCM profile. The machinery condition PCM profile may be generated based on leading and lagging scores. The lagging score 1110 may be the mechanism for the condition-based program for CBP supporting notation data. This data may come via first-party programs, and/or third party and service suppliers and the like. The lagging score 1110 may be generated based on user supplied data 1112 comprising planned maintenance (PM) 1112a, condition monitoring (CM) 1112b, and failures with respect to mean time between repair (MTBR) 1112c.

For planned maintenance 1112a, machinery may be rated based on the percentage of completed preventative maintenance. As an example and not by way of limitation, 1 may indicate good with 100% completion, 2 may indicate fair with 75% completion, 3 may indicate poor with 50% completion, and 4 may indicate unsatisfactory with less than 50% completion. Condition monitoring (CM) 1112b may be where a report from a third-party service supplier is ingested. Data may be processed and analyzed already, so it is lagging. In other words, it may show a historical report of trended or analyzed and trended past data.

For failures (MTBR) 1112c, machinery may be rated based on the MTBR data and record of repairs. A base value may be determined on the MTBR data provided. Base score may increase or decrease depending on the type of repair (general or breakdown), impact of the deficiency, and frequency (e.g., reoccurring issue or isolated incident). As an example and not by way of limitation, 1 may indicate good with MTBR values between 99,999 and 1825 run time hours, 2 may indicate fair with MTBR values between 1824 and 1095, 3 may indicate poor with MTBR values between 1094 and 548, and 4 may indicate unsatisfactory with MTBR value below 548. The planned maintenance (PM) 1112a and failures (MTBR) 1112c may be preventative maintenance program (PMP) PM driven. They may be broken down to be more explicit in the predictive compliance model as two factors. This may be why PMP is required supporting notation.

The lagging score 1110 may be also based condition of class (COC) 1114a of freedom 1114. For condition of class 1114a, machinery may be rated on history of conditions of class. As an example and not by way of limitation, 1 may indicate machinery that had no record of a condition of class, 2 may indicate machinery with resolved conditions of class older than one year and less then two years, and 4 may indicate machinery with a recent condition of class or a condition that has occurred more than once.

The leading score 1120 may be the mechanism for the condition-based program that comes from first-party class compliance tiered services such as RAM analysis 1122 and anomaly detection (AD) 1124. These tiered services may serve as predictive compliance tools feeding the predictive compliance model. Such tools may be used to support the CBP class model. RAM analysis 1122 and anomaly detection 1124 may be predictive services using engineering or data science and using the raw data in first-party applications. RAM analysis 1122 and anomaly detection 1124 may show onset of problems. Hence, they may be more predictive compliance and considered leading indicators. A problem has not happened, and it may be incipient. The first party may do this as part of the CBP service tier selected. In particular embodiments, RAM analysis 1122 and anomaly detection 1124 may be accessed via a machinery dashboard 1125.

RAM analysis 1122 may comprise machinery rating based on risk and reliability trend in RAM analysis 1122. As an example and not by way of limitation, 1 may indicate combined 1:1 scoring for both parameters (risk * trend equivalent to 1 or less than 1). 2 may indicate combined 1:2 scoring for both parameters (risk * trend equivalent to 2). 3 may indicate combined 1:30 or 1:4 or 2:2 scoring for both parameters (risk * trend equivalent to 3 or 4). 4 may indicate combined 2:3, 2:4, 3:3, 3:4, or 4:4 for both parameters (risk * trend equivalent to greater than 4). Anomaly detection 1124 may comprise machinery health monitoring (MHM) alerts, where machinery may be rated based on severity level of alert. As an example and not by way of limitation, 1 may indicate severity value of 0, 2 may indicate severity value of 3, 3 may indicate severity value of 2, and 4 may indicate severity value of 1.

Based on PCM weighting logic (as denoted by *A*), the computing system may generate a weightage table 1130 from user supplied data 1112, freedom 1114, and data accessed from machinery dashboard 1125. The computing system may further aggrege scores assigned to machinery items (as denoted by *B*) to generate the PCM machinery score 1140. Utilizing a combination of data analytics and first principles based finite element analysis of the vessel's hull and machinery utilizing digital twins in various forms may be an effective solution for addressing the technical challenge of generating the condition profile as the combination for these technologies may effectively leverage all potential data sources and types related to vessel operations residing within class as well as being sourced live or in near real-time from the user.

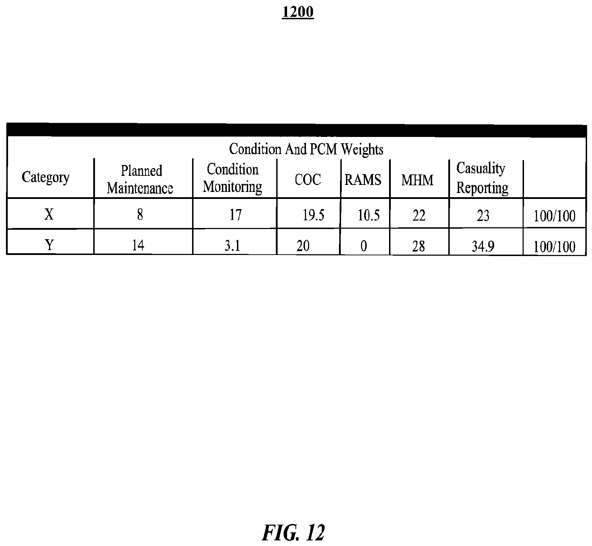

**FIG. 12** illustrates an example weightage table 1200. The weightage table 1200 may comprise a list of all PCM machinery categories (e.g., X and Y) and weightages. Each category may be assigned varying levels of percent weightage for each of the six inputs, i.e., planned maintenance, condition monitoring, condition of class (COC), reliability availability maintainability study (RAMS), machinery health monitoring (MHM), casualty reporting (failures). All machinery and components may be assigned a PCM category. Based on the weightage table 1200, the computing system may aggrege scores assigned to machinery items to generate the PCM machinery score. As an example and not by way of limitation, six individual scores may be automatically reviewed by the weightage table 1200. Depending on the category chosen, varying percentage may be applied to each input. A single PCM machinery score may be output and associated to the machinery or component. It should be noted that the example categories and weights are just for illustrative purposes. Furthermore, although FIG. 12 illustrates a particular weightage table with particular categories and percent weightages, this disclosure contemplates any suitable weightage table with any suitable categories and percent weightages.

In particular embodiments, there may be a structural dashboard for all tiers, i.e., S1, S2, and S3. The structural dashboard may fuse hindcast met-ocean data and naval architecture domain expertise to deliver structural condition insights. The structural dashboard may provide a view into the operational profile of enrolled CBP vessels and allow the aggregation of operational load history used to continually update the structural digital twin (SDT) and the applicable vessel's CBP survey plan. The operator may also receive data-driven insights regarding extreme load events, accumulated fatigue damage, and potential impacts to structural critical areas as documented in the structures survey planning document (SPD) and CBP survey plan. The structural dashboard may manage environmental loading-based hull monitoring and data aggregation for the structural digital twin. Route-specific wave conditions may be monitored via position data and through met-ocean hindcast services and first-party tools that correlate such data. The experienced sea-state conditions may be converted into dominant vessel structural loads determined from seakeeping analysis. These loads may be monitored in the dashboard and alerts may be created when the vessel's pre-configured operational thresholds are exceeded. Such alerts may require dispositioning by both the operator and the first party.

In particular embodiments, there may be a 3D condition model database for tier S2 and higher. This condition database may facilitate and capture the hull/structural condition data and assist in managing hull inspection and survey results. A 2D viewer, may provide an interactive traffic-light status of condition in vessel compartments for the various condition criteria as well as housing the vessel-specific structures SPD information embedded within the database and critical areas derived from the structures SPD. The 3D model may also support inspection and repair such as gauging planning and execution and repairs during vessel availabilities. The 3D model may allow for interactive 3D hull visualization, condition tracking and links to finite element analysis software solutions that assist users in organizing and managing structural condition information. The 3D model may provide a higher degree of visualization for the vessel's condition and allow the relevant condition information to be tracked within the model in a historical timeline.

In particular embodiments, there may be a hull sensor dashboard for tier S3. This sensor dashboard may collect time-series data from installed hull sensors as prescribed by an approved sensor installation plan to continuously update the knowledge on the loading and structural responses of the vessel. Operational sensor thresholds may be set to generate alerts in the survey reporting system when sensor data exceeds a pre-determined set of values. Sensors may be placed for both vessel global response calibration and optionally at locations of critical structures as determined by the structures SPD. A vessel-specific structural sensor plan may support enhanced understanding of both vessel responses to the seas as well as insight into locations where sensors are placed for direct monitoring to support structural integrity understanding and enhanced survey, inspection and repair planning. Such data can identify integrity-related issues and guide future inspection planning and scope changes. The dashboard also enables visualizations of the sensor data, including overlaying multiple sensor types to help provide sensor-based insights that can help reduce uncertainty and provide increased confidence in the structural integrity risk profile to better inform and target future structural inspections. Vessel sensor time series data, may be sent by the operator in the required fidelity related to that sensor's purpose, comprising either streaming, periodic or batch upload into the sensor dashboard for processing.

In particular embodiments, there may be a survey plan for hull/structures. In all CBP structural tiers, the structural component of the CBP survey plan may be derived from a rule-based scantling strength evaluation and an finite element analysis (FEA)-based strength and fatigue analyses. These analyses may incorporate the as-designed or previous vessel route history and the as-built or current hull condition. The as-delivered baseline hull condition may be captured within the finite element model, as applicable. That finite element model may be also kept up to date with current hull conditions either by direct updating or optionally through the 3D condition model database if notation S2 or higher is selected. These evaluations may be then used to produce the structural component of the initial CBP survey plan and the accompanying structures survey planning document (SPD) which highlights structural critical areas to be examined with specific scope and frequency, based on a critical area risk categorization for the entire vessel. The suite of analyses and condition models and their associated degradation models may comprise the structural digital twin (SDT), which is described diagrammatically in FIG. 7.

In particular embodiments, the structural digital twin may use data from various sources to represent the current state of the vessel's scantlings (material thicknesses) in all respects throughout the vessel's lifecycle. Such sources may include design documentation and as-built drawings, repair or modification history, in-service vessel ultrasonic thickness (UT) gauging measurements, operational and environmental data, results from an initial condition baseline assessment or sustainment survey assessments, and results from engineering analyses.

At the heart of the structural digital twin may be the engineering models and their associated analyses. The structural analyses may identify critical areas for survey and inspection, recommend survey inspection frequencies for the various critical areas of concern, and assist with the identification of immediate, near-term, and long-term repairs in the case of existing vessels.

In particular embodiments, the strength assessment may be performed in a two-step process covering a rules scantling evaluation and an FE-based global strength assessment (GSA). The main objective of the rules scantling evaluation may be a scantling assessment for global and local strength requirements of applicable rules (using the corroded condition of the vessel, if applicable). The main purpose of the global strength assessment may be to confirm that the identified design scantlings in their current condition are adequate to resist the failure modes of yielding, buckling, and ultimate strength. This may be accomplished using a dynamic loading approach (DLA) which provides an enhanced structural analyses basis to assess the capabilities and sufficiency of a structural design. Results from both the rules scantling evaluation and the global strength assessment may be then used to determine inspection and repair guidelines using the set of risk matrices.

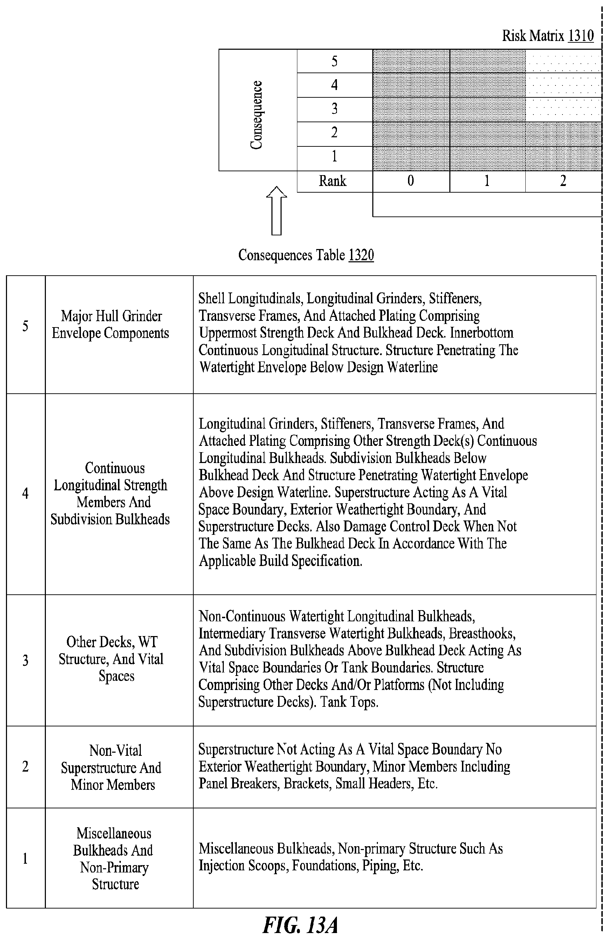

**FIGS. 13A-13B** illustrate an example global strength assessment critical area risk profile for hull/structural condition PCM. Such risk profile may outline the set of risk matrices as mentioned above. The risk matrices 1310 may be generated based on a consequence table 1320 and a likelihood table 1330. The risk matrices 1310 may be color coded to indicate different levels of risk, e.g., high 1312, medium high 1314, medium low 1316, and low 1318.

In the consequences table 1320, there may be five consequences, denoted by 1 to 5. The first consequence may include miscellaneous bulkheads and non-primary structure such as injection scoops, foundations, piping, etc. The second consequence may include non-vital superstructure and minor members. Superstructure may not act as a vital space boundary nor exterior weathertight boundary. Minor members may include panel breakers, brackets, small headers, etc. The third consequence may include other decks, watertight structure, and vital spaces. For example, they may include non-continuous watertight longitudinal bulkheads, intermediary transverse watertight bulkheads, breasthooks, and subdivision bulkheads above bulkhead deck acting as vital space boundaries or tank boundaries. Structure may comprise other decks and/or platforms (not including superstructure decks). They may also include tank tops. The fourth consequence may include continuous longitudinal strength members and subdivision bulkheads. They may include longitudinal girders, stiffeners, transverse frames, and attached plating comprising other strength deck(s). They may also include continuous longitudinal bulkheads, subdivision bulkheads below bulkhead deck, and structure penetrating watertight envelope above design waterline. They may also include superstructure acting as a vital space boundary, exterior weathertight boundary, and superstructure decks. They may further include damage control deck when it is not the same as the bulkhead deck in accordance with the appliable build specification. The fifth consequence may include major hull girder envelope components. They may include shell longitudinal, longitudinal girders, stiffeners, transverse frames, and attached plating comprising uppermost strength deck and bulkhead deck. They may also include inner bottom continuous longitudinal structure. They may additionally include structure penetrating the watertight envelope below design waterline.

In the likelihood table 1330 of the risk matrices, there may be 7 likelihood categories for unity checks (actual stress versus allowable stress). The unity check may be based on either aluminum or steel. For likelihood 0, aluminum may have a value between 1 and 1.07 whereas steel may have a value between 0.95 and 1.00. For likelihood 1, aluminum may have a value between 1.07 and 1.14 whereas steel may have a value between 1.00 and 1.05. For likelihood 2, aluminum may have a value between 1.14 and 1.21 whereas steel may have a value between 1.05 and 1.10. For likelihood 3, aluminum may have a value between 1.21 and 1.28 whereas steel may have a value between 1.10 and 1.15. For likelihood 4, aluminum may have a value between 1.28 and 1.35 whereas steel may have a value between 1.15 and 1.20. For likelihood 5, aluminum may have a value between 1.35 and 1.42 whereas steel may have a value between 1.20 and 1.25. For likelihood 6, aluminum may have a value greater than 1.42 whereas steel may have a value greater than 1.25.

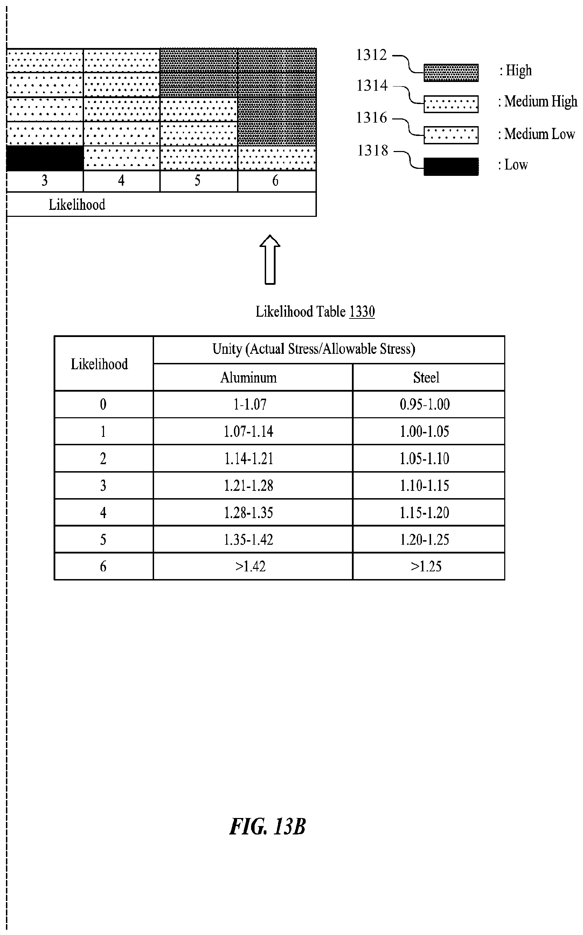

In particular embodiments, the fatigue analysis may be performed to approximate the material age of the surveyed vessel and predict the remaining fatigue life based on its design profile (for a newbuild) and operational history and observed degradation (for existing vessels). The analysis may be performed with the finite element model representing the as-built and/or corroded condition (if applicable) of the vessel using the spectral-based fatigue analysis (SFA) approach, accomplished via the analysis approach specified in this disclosure. The calculated fatigue damage for all ship structural details may be then used to determine the inspection and repair guidelines using the risk matrices outlined in FIGS. 13-16.

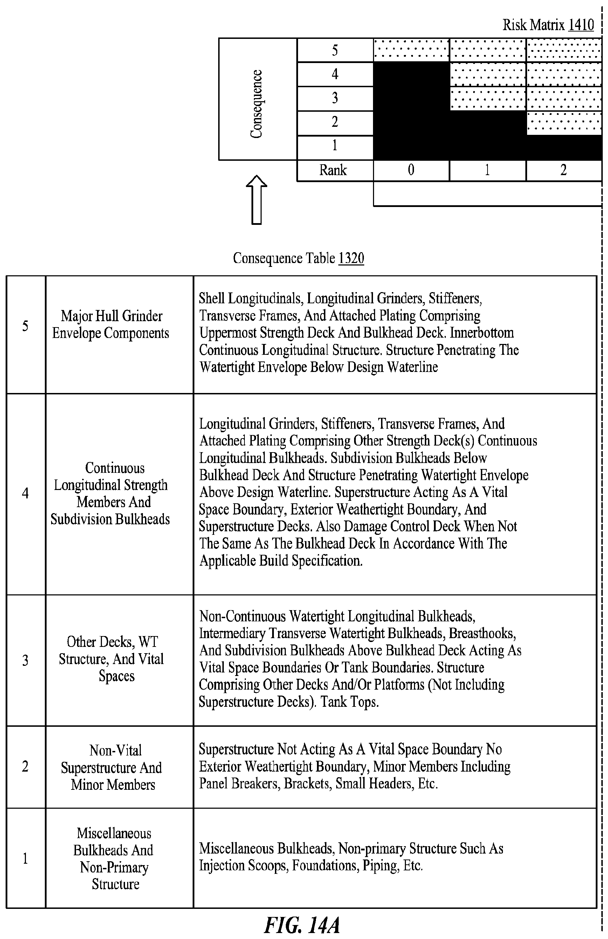

FIGS. 14A-14B illustrate an example rules-scantling evaluation (RSE) for critical area risk assessment for hull/structural condition PCM. The assessment may be based a risk matrix 1410. The risk matrix 1410 may be generated based on the consequence table 1320 and a likelihood table 1420. The risk matrix 1410 may be color coded to indicate different levels of risk, e.g., high 1412, medium high 1414, medium low 1416, and low 1418. The consequence table 1320 may be the same as the one illustrated in FIG. 13. The likelihood table 1420 may be a strength RSE likelihood table with 6 likelihood categories. For likelihood 0, the capacity may be between 1 and 1.05. For likelihood 1, the capacity may be between 1.05 and 1.10. For likelihood 2, the capacity may be between 1.10 and 1.15. For likelihood 3, the capacity may be between 1.15 and 1.20. For likelihood 4, the capacity may be between 1.20 and 1.25. For likelihood 5, the capacity may be greater than 1.25.

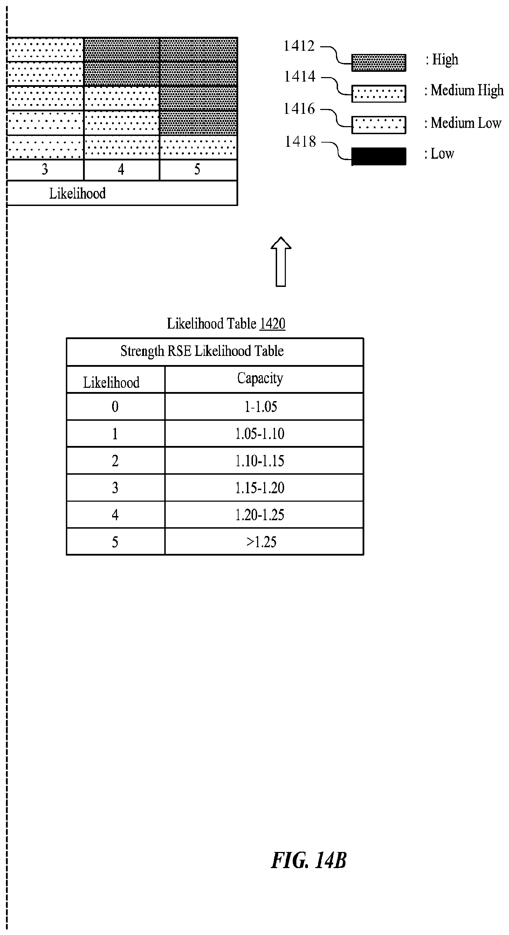

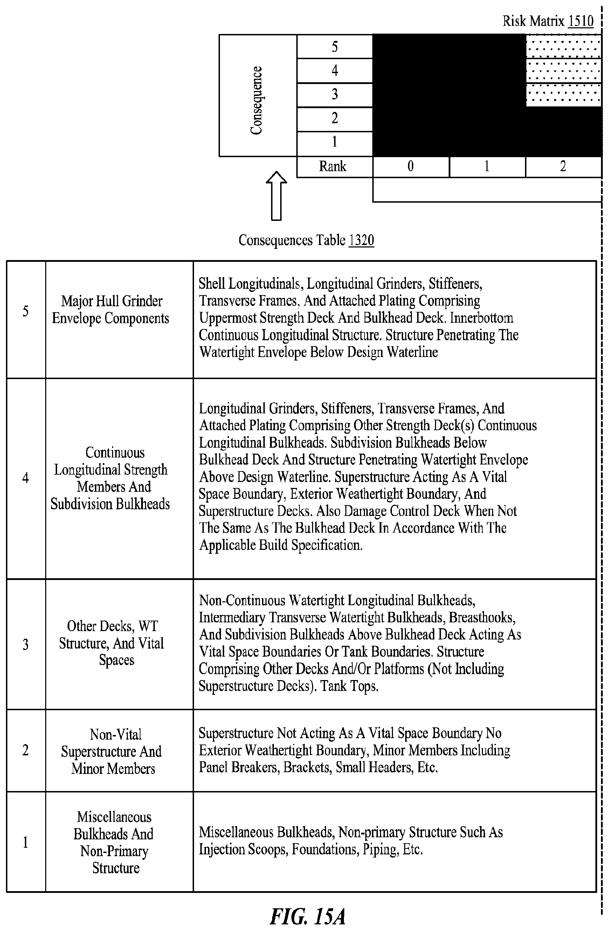

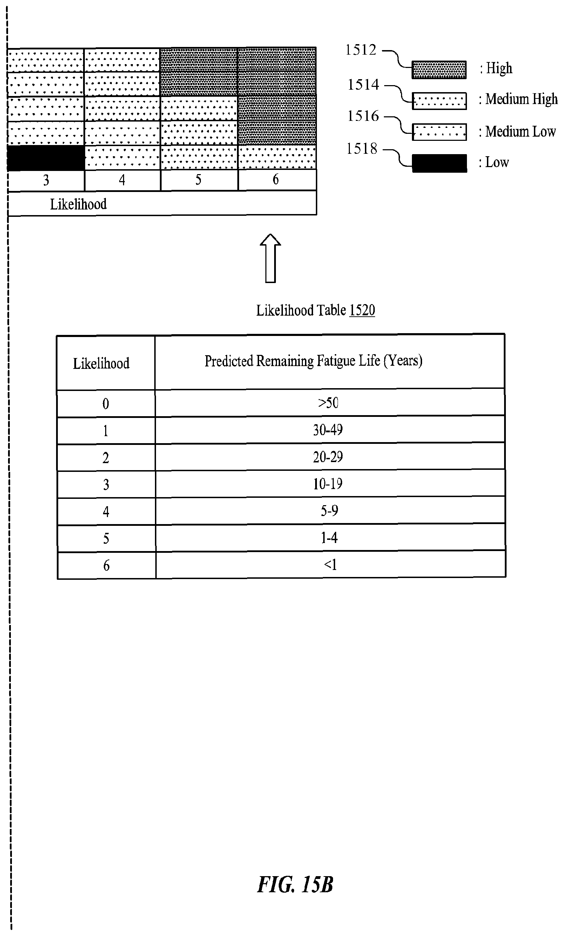

FIGS. 15A-15B illustrate an example spectral-based fatigue assessment for risk assessment for hull/structural condition PCM. The assessment may be based upon a risk matrix 1510. The risk matrix 1510 may be generated based on the consequence table 1320 and a likelihood table 1520. The risk matrix 1510 may be color coded to indicate different levels of risk, e.g., high 1512, medium high 1514, medium low 1516, and low 1518. The consequence table 1320 may be the same as those illustrated in FIG. 13 and FIG. 14. In the likelihood table 1520, there may be 7 likelihood categories. For likelihood 0, the predicted remaining fatigue life may be more than 50 years. For likelihood 1, the predicted remaining fatigue life may be between 30 and 49 years. For likelihood 2, the predicted remaining fatigue life may be between 20 and 29 years. For likelihood 3, the predicted remaining fatigue life may be between 10 and 19 years. For likelihood 4, the predicted remaining fatigue life may be between 5 and 9 years. For likelihood 5, the predicted remaining fatigue life may be between 1 and 4 years. For likelihood 6, the predicted remaining fatigue life may be less than 1 year.

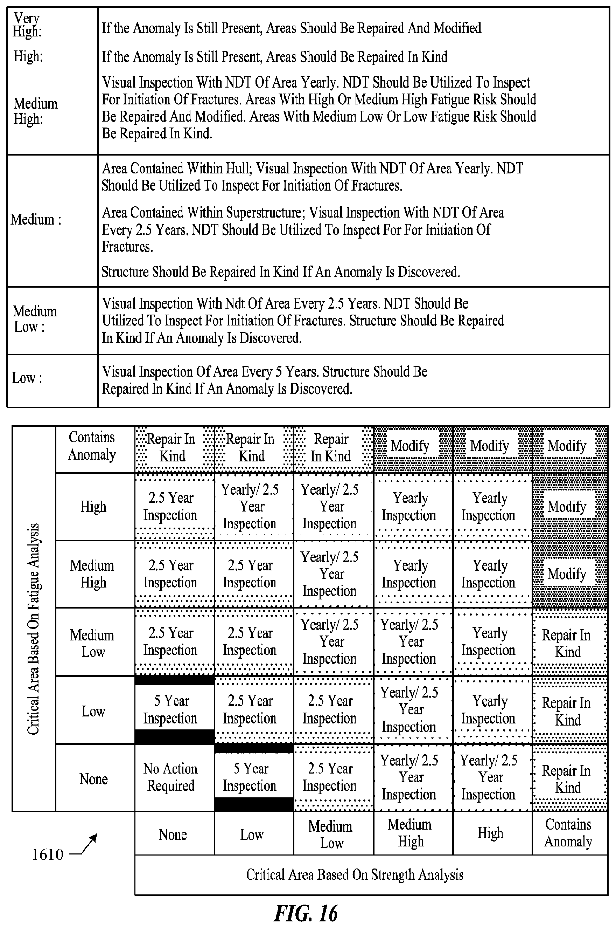

FIG. 16 illustrates an example consolidated critical area risk matrix 1610 for structures survey plan and survey planning document incorporation for hull/structural condition PCM. The risk matrix 1610 may be based on critical area based on strength analysis and critical area based on fatigue analysis. For very high risk for containing anomaly, if the anomaly is still present, areas should be repaired and modified. For high risk for containing anomaly, if the anomaly is still present, areas should be repaired in kind. For medium high risk for containing anomaly, visual inspection with NDT of area should be done yearly. NDT may be utilized to inspect for initiation of fractures. Areas with high or medium high fatigue risk should be repaired and modified. Areas with medium low or low fatigue risk should be repaired in kind.

For medium risk for containing anomaly, areas contained within hull may require visual inspection with non-destructive testing (NDT) of area yearly. NDT may be utilized to inspect for initiation of fractures. Areas contained within superstructure may require visual inspection with NDT of area every 2.5 years. NDT should be utilized to inspect for initiation of fractures. For medium low risk for containing anomaly, it may require visual inspection with NDT of area every 2.5 years. NDT may be utilized to inspect for initiation of fractures. Structures should be repaired in kind if an anomaly is discovered. For low risk for containing anomaly, it may require visual inspection with NDT of area every 5 years. Structures should be repaired in kind if an anomaly is discovered

In particular embodiments, the computing system may generate, for the first data profile, a machinery score based on one or more of planned maintenance data, condition monitoring data, data associated with mean time between repairs, a condition of class, analysis scoring of reliability, availability and maintainability, or an anomaly detection. For PCM condition profile for machinery, the computing system may utilize various data inputs to generate a PCM score, utilizing criteria specified in FIG. 11, as applicable. As an example and not by way of limitation, the criteria may include planned maintenance and condition monitoring data as received from the operator's computerized maintenance management system (CMMS). As another example and not by way of limitation, the criteria may include mean time between repair data (MTBR) received from the operator's CMMS system. As yet another example and not by way of limitation, the criteria may include conditions of class (COC) as noted in the survey reporting system at the time of occurrence. As yet another example and not by way of limitation, the criteria may include reliability, availability and maintainability (RAM) analysis scoring for tier 2 and tier 3. As yet another example and not by way of limitation, the criteria may include system anomaly detection alerts and scoring, when applicable for tier 3.

Each piece of equipment may possess various combinations of inputs based on the CBP tier features available. As illustrated in FIG. 11, these inputs may be then synthesized in the predictive compliance model to generate a single PCM score. This score may be displayed next to the class item in both the survey reporting system and the survey plan.

In particular embodiments, the computing system may generate preventative maintenance program (PMP) data and class profile for tier M1. The CBP system and machinery M1 tier may be based on the criticality and a PCM profile based on the preventative maintenance program (PMP), covering status of planned maintenance, condition monitoring or smart function, failure history, and the presence of conditions of class.

In particular embodiments, there may be a RAM and risk profile for tier M2 and higher. The RAM analysis may analyze transactional CMMS data sets to provide insights for key performance indicators on emerging system compliance operational related risks, provide benchmark reliability estimates for critical components, and provide a vessel-level reliability risk score for unplanned maintenance. Data analytics and modelling may be combined with the domain expertise to generate insights from CMMS data with the outcome of increasing RAM of vessel systems. A RAM analysis may be performed to assess critical machinery assets and to identify critical areas that can potentially impact overall operational availability and reliability. For this purpose, the computing system may utilize historical CMMS data supplied by the vessel operator to perform an independent assessment to benchmark the current reliability of major machinery systems. The analysis may provide insight into reliability issues affecting enrolled CBP vessels and identify emergent compliance risks for major machinery systems, and for cases where sufficient data is available, also analyze the sub-systems under the systems. In particular embodiments, this approach may assist the vessel operator with targeted areas for improvement to increase operational availability. The RAM analysis may be also used to evaluate systems reliability, using a "System-of-Systems" approach, utilizing reliability block diagrams (RBDs) and other related methodologies. The reliability block diagrams may include individual systems and their sub-systems covering all operating conditions of the vessel. In addition, RAM may guide the identification of machinery systems (or their sub-systems) as a starting point for the use of the M3-tier anomaly detection service. Sensor data may be used to perform predictive data analysis for potential compliance issues or equipment and system degradation and failure risks, with the first party and the operator taking mitigating responses to minimize those risks.

In particular embodiments, the computing system may perform anomaly detection for tier M3. The anomaly detection service may comprise algorithms to detect early indications of potential failures using anomaly detection, by combining knowledge of physical understanding of assets with statistical patterns derived from data. The identification of potential failure events for selected specific systems, sub-systems or components covered may be performed by using the continuous stream (or batch mode) of OEM installed sensor data from the covered systems, and by combining domain knowledge and operations with advanced artificial intelligence and machine learning. Anomaly detection may involve a suite of algorithms to monitor the operational state of select critical equipment, often driven by the RAM service identification of negative reliability contributors, to detect early indications of compliance issues or potential failures. The approach may combine domain knowledge and physical understanding of assets with statistical patterns derived from data. Using machine-learning methods, adaptable representations of such anomalies may be built into a series of algorithms that are used to detect any anomalous data patterns correlated to the onset of condition degradation or improper operation which may lead to functional failure. The methods may be also capable of capturing signatures which might not have historical precedence but have a strong likelihood of developing into compliance issues.

In particular embodiments, the profile for statutory, regulatory, and port state control and the profile for ISM/management system quality may comprise weighted factors and outliers that each tally up into a risk profile/score. The weighted factors and outliers may be determined from various public and first-party data collected and stored historically related to port state, statutory and class findings, non-conformances, open and closed conditions of class, and the like. As an example and not by way of limitation, these data categories may cover approximately 100 fields of data, such as vessel age, vessel flag, vessel type, class society history, conditions of class and lesser findings, overdue conditions of class and findings, owner history, ISM and quality system audit results, port state detections and interventions, flag state inspections, and international association of class society (IACS) PR-17 occurrences.

In particular embodiments, the profile for statutory, regulatory, and port state control and the profile for ISM/management system quality may be also structured into leading and lagging weighted factor sets. In particular embodiments, the one or more lagging factors associated with each of the plurality of data profiles may be determined based on transactional data. Each of the lagging factors may be based on one or more of surveyor condition scoring, user maintenance completion, user maintenance effectiveness, condition monitoring, a smart function, or a condition of class. In other words, lagging factors deriving from transactional data sets (first party, user, or both) may focus primarily on surveyor condition scoring, user maintenance completion and effectiveness, audit results, vessel profile, findings and conditions of Class.

In particular embodiments, the one or more leading factors associated each of the plurality of data files may be determined based on one or more of transactional data, time-series sensor data, or contextual data. The leading factors may derive from the following approaches within these facets. In particular embodiments, the leading factors may derive from a set of lagging factors rolled up into a composite "index" and trended with the value score of the leading factor(s) affected by the "slope" of the trend line. As an example and not by way of limitation, the trend line may be 3-year rolling average, improving, getting worse, flat. In particular embodiments, the leading factors may derive from values that are truly incipient issues that ultimately may manifest themselves into vessel deficiencies of some sort. In short, they may be truly leading indicators themselves.

Transforming user data related to condition, maintenance program health and first-party data related to class program health into both lagging and leading PCM factors may be an effective solution for addressing the technical challenge of effectively leveraging such data as lagging factors derived from transactional data sets are focused on surveyor condition scoring, user maintenance completion and effectiveness, condition monitoring or smart technology functions, and conditions of class and leading factors derived from contextual, transactional and time-series data are focused on predictive condition and reliability trending to analyze the data to contribute to the leading risk profile.

In particular embodiments, the general format of all PCM facets outside of the condition profile may follow a leading/lagging model as described above. Lagging factors may be individual data values (from first party, public source, or user themselves) or composite indices of like or linked values, all within a weighted model. Each facet may use a subject matter expert (SME) determined set of already collected lagging factors sorted/grouped by the five PCM facets. They may be then put into the lagging side as individual values or as indices that cover a set of linked values or factors.

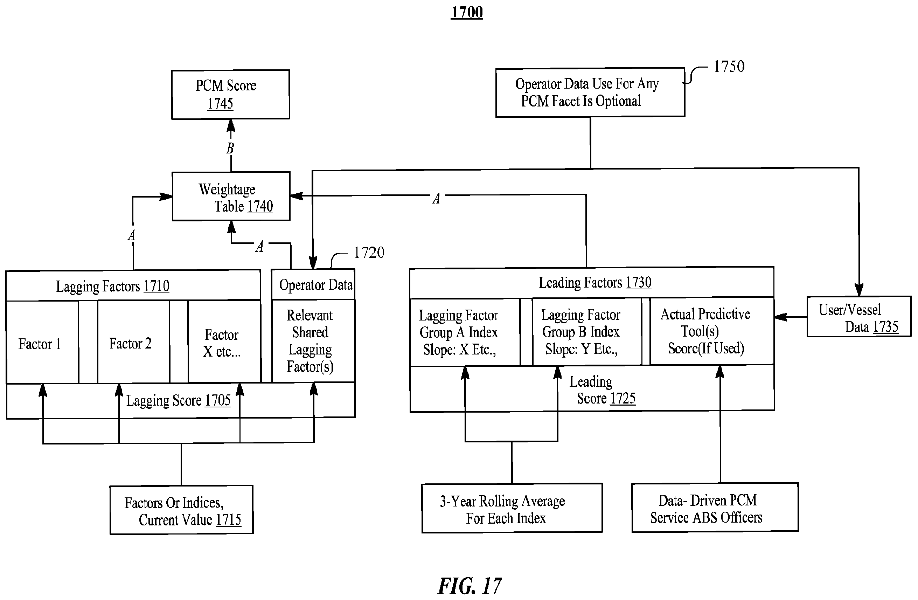

**FIG. 17** illustrates an example general format 1700 of all PCM spider diagram facet scores. The lagging score 1705 may be calculated based on lagging factors 1710 derived from first-party data set(s) and user data. The lagging factors 1710 may comprise factor 1, factor 2, and factor X etc., which may be factors, indices, or current value 1715. The user data 1720 may comprise relevant shared lagging factor(s), which may be factors, indices, or current value 1715. The leading score 1725 may be calculated based on leading factors 1730, which may be derived from user/vessel data 1735. As an example and not by way of limitation, the leading factors 1730 may comprise lagging factor group A index slope (X etc.), lagging factor group B index slope (Y etc.), and actual predictive tool(s) score (if used). As an example and not by way of limitation, lagging factor group A index slope and lagging factor group B index slope may comprise 3-year rolling average for each index. As another example and not by way of limitation, the actual predictive tool(s) score may comprise data-drive PCM services. Based on PCM weighting logic (as denoted by $A$), the computing system may generate a weightage table 1745 from lagging factors 1710, operator data 1720, and leading factors 1730. The computing system may further aggrege scores (as denoted by $B$) to generate the PCM score 1745. In particular embodiments, operator data usage for any PCM facet may be optional 1750.

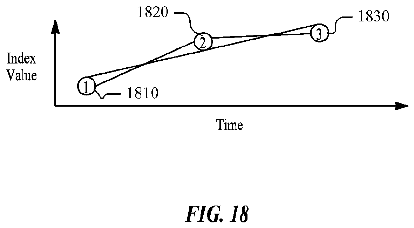

In particular embodiments, leading indicators may be formed either from values that are true leading indicators of vessel deficiencies or from trended values or indices over a 3-year rolling average, with the trend of slope itself being used to assess the trend as a leading indicator. **FIG. 18** illustrates an example PCM lagging factor or factor composite index as leading factors themselves. The computing system may use a 3-year rolling average slope to assess the trend as a leading indicator. For any point in time (point 1810, point 1820, and point 1830), one or more indices with $X$ number of lagging factors may have a form of "PCM facet index = factor 1/watertight + factor 2/watertight + factor 3/watertight." The slope in FIG. 18 is an upwards trend. Whether such a trend is good or bad may depend on the attribute set.

In particular embodiments, slope of the rate of change value times an age multiplier may be used as a leading risk indicator depending on the index attribute. As an example and not by way of limitation, slope in a negative direction (worse direction) may indicate a set of PCM attributes moving in the wrong or bad direction from a risk perspective (medium to high risk). In particular embodiments, slope may be used as an absolute value to add or subtract from the total PCM facet score or as a multiplier on the lagging set total score.

In particular embodiments, each value or variable within the PCM data set may follow a specific data format. These could be any of the following. In particular embodiments, the data format may be a rate of change single value, for example, a corrosion rate value(s) or a corroded amount that can be trended to a rate. In particular embodiments, the data format may be rate of change. The rate of change may be trended rate of a group of values (e.g., corrosion rate, S-curve representing composite material loss of a hull girder section, hull girder/girder flange area, aggregated corrosion rate in specific area, zone, etc.). In particular embodiments, the data format may be graded value. As an example and not by way of limitation, the graded value may be hull inspection and maintenance program (HIMP) grading criteria condition score by zone location, coating grades, etc. graded at point in time as a lagging factor. However, the graded value trended over 3-year rolling average, slope of change, good or bad, may be a leading factor. In particular embodiments, the data format may be a binary value indicating being in/out of compliance, which may be used as a count over a period or as part of an index. In particular embodiments, the binary value may indicate the number of items in factor (conditions of class, tanks with fair/poor coatings, etc.) but related to each other to form in that they measure similar or same attribute which can be summed or formatted as an index to be trended over time. An index of a certain attribute, a 3-year rolling average and trend slope here may also be used as a leading indicator.

In particular embodiments, variable treatment of uncertainty in all PCM values, composites and facet values may be as follows. In particular embodiments, the one or more standards may comprise one or more regulatory standards at present or at any future point. The predictive compliance model may quantify and assess the overall risk that an engineering system(s) is out of compliance with regulatory standards at present or at any point in the future. The result may then serve to support decision making with respect to inspection, maintenance, and repair regimes. Decision making in engineering applications may often rely on the use of mathematical or computational models to predict the behavior of complex engineering systems. In the predictive compliance model, the decision making may be based on a collection of data models and computational models that comprise a virtual representation of the engineering system of interest. These models and the associated analysis may be affected by both aleatory uncertainty (natural variability) and epistemic uncertainty (lack of knowledge regarding the variables or the models). Epistemic uncertainty may be further classified into statistical uncertainty and model uncertainty to represent the lack of knowledge of the parameters of interest and models respectively. Model uncertainty may be related to model approximations as well as the uncertainty in the model parameters.

For the predictive compliance model, the computing system may calibrate the parameters of the associated data models and computational models, and quantify the associated aleatory and epistemic uncertainty. The calibration and uncertainty quantification process may be informed by data and require that all available information is properly incorporated into the model via an updating process. Data may be available in many different forms, including but not limited to experimental and operational data, inspection reports, health monitoring data, engineering plans, rules and standards, and expert opinion. In particular embodiments, the computing system may mathematically represent and quantify the various sources of uncertainty and compute the combined effect on the system-level response. As an example and not by way of limitation, the computing system may utilize a rigorous framework existing in both academia and industry for uncertainty quantification and propagation from single-level models all the way to component-level and system-level analysis. Established statistical methods may be employed for the treatment of data uncertainty and model uncertainty.

In particular embodiments, consider a model $G$, with associated model parameters $\theta_m$, which takes a set of inputs $X$, and transforms them to an output $Y$. Uncertainty may exists in all the elements of this system that shall be quantified to support propagation. In particular embodiments, a Bayesian framework may be used to represent the parameters as joint probability distributions with parameters that can be updated by the available information. The resulting output $Y$ may be then given as a probability distribution, where the compliance threshold may then be defined and a probability of being out of compliance may be calculated. In complex systems, Y may be represented as a joint distribution and the compliance threshold may be defined as a surface.

Bayesian networks may provide a convenient framework for graphically representing probabilistic relationships among multiple variables. More specifically, a Bayesian network may be a directed, acyclic graph (DAG) representation of a multivariate distribution, expressing its decomposition into a combination of marginal and conditional probabilities.

Each node in a Bayesian network may denote a random variable and the directed edges between nodes (arcs) may be associated with conditional probabilities. If there exists a directed edge between two nodes, the upstream node may be designated the parent node and the downstream node may be designated the child node. The dependence between these nodes may be described mathematically by a conditional probability distribution. Based on the directed Markov condition, a node may be independent of its non-descendant nodes when conditioned on its parent nodes. Therefore, the Bayesian network may be decomposed into a product of conditional and marginal probabilities using the graphical structure and the chain rule of probability. If the random variables in a Bayesian network are denoted as $X = \{X1, X2,..., Xn\}$, then from the chain rule in probability theory, the joint distribution of $X$ may be given by

$$f_X(X) = \prod_{i=1}^{n} f_{X_i}(X_i|Pa_{X_i}) \qquad (1)$$

where $f_{X_i}(X_i|Pa_{X_i})$ denotes a conditional probability distribution of $X_i$ and $Pa_{X_i}$ denotes the parent nodes of $X_i$. If $f_{X_i}(X_i|Pa_{X_i}) = f_{X_i}(X_i)$, then $X_i$ may be a root node and be defined by a marginal distribution.

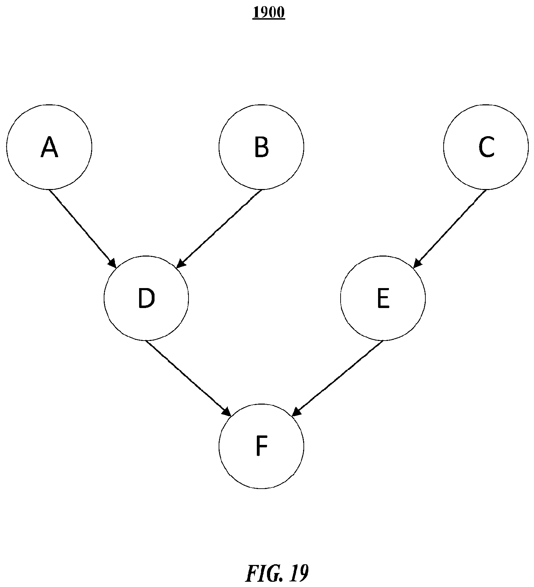

**FIG. 19** illustrates an example DAG 1900. For the example DAG 1900 given in FIG. 19, the joint distribution of the Bayesian network may be decomposed as:

$$p(A, B, C, D, E, F) = p(F|D, E)p(D|A, B)p(A)p(B)p(E|C)p(C). \quad (2)$$

In directed graphical models, the direction of the arcs between nodes may also be seen as indicating causality. For example, in FIG. 19, the arc from $C$ to $E$ may be regarded as signifying that $C$ "causes" $E$. For many engineering applications, where the relationships between random variables are related by known physics models, this may be often convenient for the construction of the graph structure. In these cases, the arc directions may be established from the known causality of the data generative process being modeled.

Consider again a random sample of data x1, ..., xn now taken from a distribution f(x|θ) for a random variable which is dependent on unknown input parameters θ contained in a parameter space Θ. In the canonical Bayesian inference process, the goal may be to estimate the posterior distribution of θ. Existing knowledge of θ may be represented through the prior distribution f'(θ) and this knowledge may be updated through the information provided from the observed data x1, ... , xn in the form of the likelihood function, given as f(x|θ) or L(θ|x) or simply L(θ). Utilizing probability laws and Bayes' theorem, the posterior distribution is given as

$$f''(\theta|x) = \frac{L(\theta)f'(\theta)}{\int L(\theta)f'(\theta)d\theta}. \quad (3)$$

It may be seen that the denominator is the marginal distribution of the data based on the prior f'(θ) and may be simply a normalization factor. Therefore, the posterior distribution may alternatively be written as

$$f''(\theta|x) \propto L(\theta) f^{\wedge'} (\theta). \quad (4)$$

The likelihood function may be understood as the probability of observing the given data x1, ... , xn conditioned on the parameters θ. From the perspective of the Bayesian network as established above, the expression for the likelihood function may be given as

$$L(\theta|x) \propto f_X (X = x|Pa_X) \quad (5)$$

where $Pa_X \in \theta$ are the parent nodes of X and $f_X(X = x| Pa_X)$ is the PDF value at X = x from the conditional probability distribution for $X_i$. This formulation for the likelihood function may consider data collected from a single experiment. In the case of data obtained from n different independent experiments, the final likelihood function may be the product of the n likelihood functions calculated for each individual experiment:

$$L(\theta) \propto \prod_{i-1}^n f_X (X = X_i|Pa_X). \quad (6)$$

Thus, the implementation of the predictive compliance model may require two processes. One process may be applying the inverse problem to use the observations of various heterogenous data to update the model parameters, θ, in the Bayesian network. Another process may be applying the forward problem to propagate the uncertainty to determine the output distribution, Y, and determine the risk of the system being out of compliance. State-of-art approaches may be employed for conducting the inverse and forward problems.

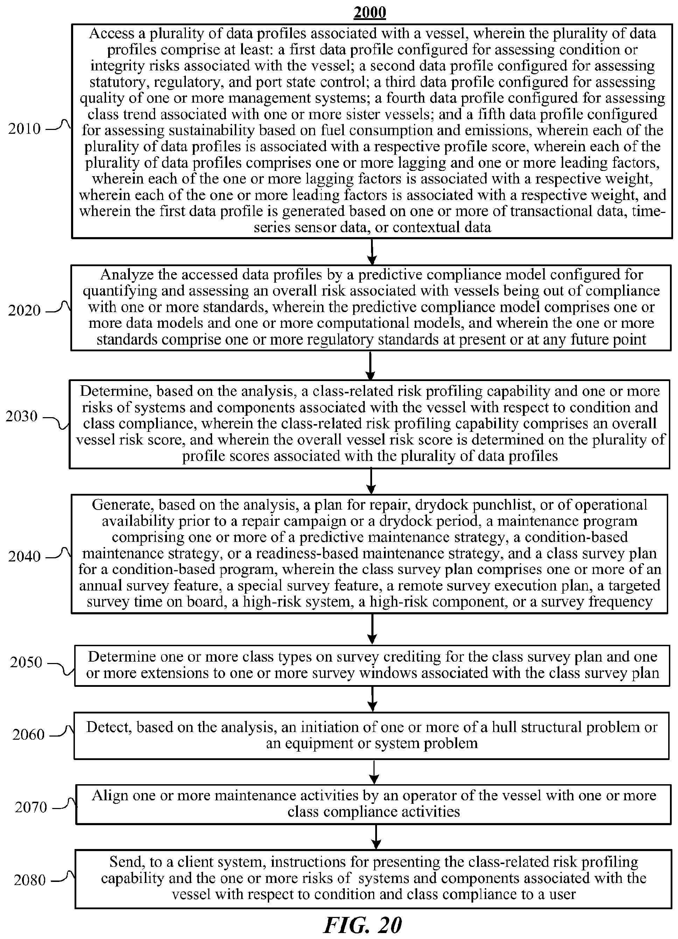

**FIG. 20** illustrates an example method 2000 for analyzing vessel health, performance, and mission readiness. The method may begin at step 2010, where the computing system may access a plurality of data profiles associated with a vessel, wherein the plurality of data profiles comprise at least: a first data profile configured for assessing condition or integrity risks associated with the vessel; a second data profile configured for assessing statutory, regulatory, and port state control; a third data profile configured for assessing quality of one or more management systems; a fourth data profile configured for assessing class trend associated with one or more sister vessels; and a fifth data profile configured for assessing sustainability based on fuel consumption and emissions, wherein each of the plurality of data profiles is associated with a respective profile score, wherein each of the plurality of data profiles comprises one or more lagging and one or more leading factors, wherein each of the one or more lagging factors is associated with a respective weight, wherein each of the one or more leading factors is associated with a respective weight, and wherein the first data profile is generated based on one or more of transactional data, time-series sensor data, or contextual data. At step 2020, the computing system may analyze the accessed data profiles by a predictive compliance model configured for quantifying and assessing an overall risk associated with vessel being out of compliance with one or more standards, wherein the predictive compliance model comprises one or more data models and one or more computational models, and wherein the one or more standards comprise one or more regulatory standards at present or at any future point. At step 2030, the computing system may determine, based on the analysis, a class-related risk profiling capability and one or more risks of systems and components associated with the vessel with respect to condition and class compliance, wherein the class-related risk profiling capability comprises an overall vessel risk score, and wherein the overall vessel risk score is determined on the plurality of profile scores associated with the plurality of data profiles. At step 2040, the computing system may generate, based on the analysis, a plan for repair, drydock punchlist, or of operational availability prior to a repair campaign or a drydock period, a maintenance program comprising one or more of a predictive maintenance strategy, a condition-based maintenance strategy, or a readiness-based maintenance strategy, and a class survey plan for a condition-based program, wherein the class survey plan comprises one or more of an annual survey feature, a special survey feature, a remote survey execution plan, a targeted survey time on board, a high-risk system, a high-risk component, or a survey frequency. At step 2050, the computing system may determine one or more class types on survey crediting for the class survey plan and one or more extensions to one or more survey windows associated with the class survey plan. At step 2060, the computing system may detect, based on the analysis, an initiation of one or more of a hull structural problem or an equipment or system problem. At step 2070, the computing system may align one or more maintenance activities by an operator of the vessel with one or more class compliance activities. At step 2080, the computing system may send, to a client system, instructions for presenting the class-related risk profiling capability and the one or more risks of systems and components associated with the vessel with respect to condition and class compliance to a user. Particular embodiments may repeat one or more steps of the method of FIG. 20, where appropriate. Although this disclosure describes and illustrates particular steps of the method of FIG. 20 as occurring in a particular order, this disclosure contemplates any suitable steps of the method of FIG. 20 occurring in any suitable order. Moreover, although this disclosure describes and illustrates an example method for analyzing vessel health, performance, and mission readiness including the particular steps of the method of FIG. 20, this disclosure contemplates any suitable method for analyzing vessel health, performance, and mission readiness including any suitable steps, which may include all, some, or none of the steps of the method of FIG. 20, where appropriate. Furthermore, although this disclosure describes and illustrates particular components, devices, or systems carrying out particular steps of the method of FIG. 20, this disclosure contemplates any suitable combination of any suitable components, devices, or systems carrying out any suitable steps of the method of FIG. 20.

<u>Systems and Methods</u>

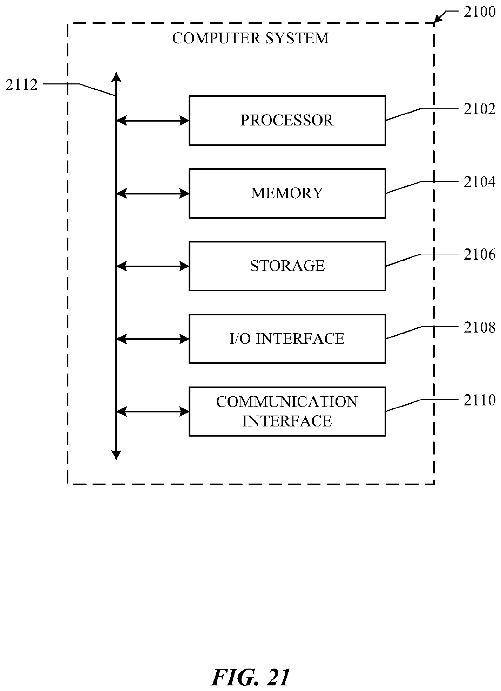

**FIG. 21** illustrates an example computer system 2100. In particular embodiments, one or more computer systems 2100 perform one or more steps of one or more methods described or illustrated herein. In particular embodiments, one or more computer systems 2100 provide functionality described or illustrated herein. In particular embodiments, software running on one or more computer systems 2100 performs one or more steps of one or more methods described or illustrated herein or provides functionality described or illustrated herein. Particular embodiments include one or more portions of one or more computer systems 2100. Herein, reference to a computer system may encompass a computing device, and vice versa, where appropriate. Moreover, reference to a computer system may encompass one or more computer systems, where appropriate.

This disclosure contemplates any suitable number of computer systems 2100. This disclosure contemplates computer system 2100 taking any suitable physical form. As example and not by way of limitation, computer system 2100 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 2100 may include one or more computer systems 2100; be unitary or distributed; span multiple locations; span multiple machines; span multiple data centers; or reside in a cloud, which may include one or more cloud components in one or more networks. Where appropriate, one or more computer systems 2100 may perform without substantial spatial or temporal limitation one or more steps of one or more methods described or illustrated herein. As an example and not by way of limitation, one or more computer systems 2100 may perform in real time or in batch mode one or more steps of one or more methods described or illustrated herein. One or more computer systems 2100 may perform at different times or at different locations one or more steps of one or more methods described or illustrated herein, where appropriate.

In particular embodiments, computer system 2100 includes a processor 2102, memory 2104, storage 2106, an input/output (I/O) interface 2108, a communication interface 2110, and a bus 2112. Although this disclosure describes and illustrates a particular computer system having a particular number of particular components in a particular arrangement, this disclosure contemplates any suitable computer system having any suitable number of any suitable components in any suitable arrangement.

In particular embodiments, processor 2102 includes hardware for executing instructions, such as those making up a computer program. As an example and not by way of limitation, to execute instructions, processor 2102 may retrieve (or fetch) the instructions from an internal register, an internal cache, memory 2104, or storage 2106; decode and execute them; and then write one or more results to an internal register, an internal cache, memory 2104, or storage 2106. In particular embodiments, processor 2102 may include one or more internal caches for data, instructions, or addresses. This disclosure contemplates processor 2102 including any suitable number of any suitable internal caches, where appropriate. As an example and not by way of limitation, processor 2102 may include one or more instruction caches, one or more data caches, and one or more translation lookaside buffers (TLBs). Instructions in the instruction caches may be copies of instructions in memory 2104 or storage 2106, and the instruction caches may speed up retrieval of those instructions by processor 2102. Data in the data caches may be copies of data in memory 2104 or storage 2106 for instructions executing at processor 2102 to operate on; the results of previous instructions executed at processor 2102 for access by subsequent instructions executing at processor 2102 or for writing to memory 2104 or storage 2106; or other suitable data. The data caches may speed up read or write operations by processor 2102. The TLBs may speed up virtual-address translation for processor 2102. In particular embodiments, processor 2102 may include one or more internal registers for data, instructions, or addresses. This disclosure contemplates processor 2102 including any suitable number of any suitable internal registers, where appropriate. Where appropriate, processor 2102 may include one or more arithmetic logic units (ALUs); be a multi-core processor; or include one or more processors 2102. Although this disclosure describes and illustrates a particular processor, this disclosure contemplates any suitable processor.

In particular embodiments, memory 2104 includes main memory for storing instructions for processor 2102 to execute or data for processor 2102 to operate on. As an example and not by way of limitation, computer system 2100 may load instructions from storage 2106 or another source (such as, for example, another computer system 2100) to memory 2104. Processor 2102 may then load the instructions from memory 2104 to an internal register or internal cache. To execute the instructions, processor 2102 may retrieve the instructions from the internal register or internal cache and decode them. During or after execution of the instructions, processor 2102 may write one or more results (which may be intermediate or final results) to the internal register or internal cache. Processor 2102 may then write one or more of those results to memory 2104. In particular embodiments, processor 2102 executes only instructions in one or more internal registers or internal caches or in memory 2104 (as opposed to storage 2106 or elsewhere) and operates only on data in one or more internal registers or internal caches or in memory 2104 (as opposed to storage 2106 or elsewhere). One or more memory buses (which may each include an address bus and a data bus) may couple processor 2102 to memory 2104. Bus 2112 may include one or more memory buses, as described below. In particular embodiments, one or more memory management units (MMUs) reside between processor 2102 and memory 2104 and facilitate accesses to memory 2104 requested by processor 2102. In particular embodiments, memory 2104 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 2104 may include one or more memories 2104, where appropriate. Although this disclosure describes and illustrates particular memory, this disclosure contemplates any suitable memory.

In particular embodiments, storage 2106 includes mass storage for data or instructions. As an example and not by way of limitation, storage 2106 may include a hard disk drive (HDD), a floppy disk drive, flash memory, an optical disc, a magneto-optical disc, magnetic tape, or a Universal Serial Bus (USB) drive or a combination of two or more of these. Storage 2106 may include removable or non-removable (or fixed) media, where appropriate. Storage 2106 may be internal or external to computer system 2100, where appropriate. In particular embodiments, storage 2106 is non-volatile, solid-state memory. In particular embodiments, storage 2106 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 2106 taking any suitable physical form. Storage 2106 may include one or more storage control units facilitating communication between processor 2102 and storage 2106, where appropriate. Where appropriate, storage 2106 may include one or more storages 2106. Although this disclosure describes and illustrates particular storage, this disclosure contemplates any suitable storage.

In particular embodiments, I/O interface 2108 includes hardware, software, or both, providing one or more interfaces for communication between computer system 2100 and one or more I/O devices. Computer system 2100 may include one or more of these I/O devices, where appropriate. One or more of these I/O devices may enable communication between a person and computer system 2100. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 2108 for them. Where appropriate, I/O interface 2108 may include one or more device or software drivers enabling processor 2102 to drive one or more of these I/O devices. I/O interface 2108 may include one or more I/O interfaces 2108, where appropriate. Although this disclosure describes and illustrates a particular I/O interface, this disclosure contemplates any suitable I/O interface.

In particular embodiments, communication interface 2110 includes hardware, software, or both providing one or more interfaces for communication (such as, for example, packet-based communication) between computer system 2100 and one or more other computer systems 2100 or one or more networks. As an example and not by way of limitation, communication interface 2110 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 2110 for it. As an example and not by way of limitation, computer system 2100 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 2100 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 2100 may include any suitable communication interface 2110 for any of these networks, where appropriate. Communication interface 2110 may include one or more communication interfaces 2110, where appropriate. Although this disclosure describes and illustrates a particular communication interface, this disclosure contemplates any suitable communication interface.

In particular embodiments, bus 2112 includes hardware, software, or both coupling components of computer system 2100 to each other. As an example and not by way of limitation, bus 2112 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 2112 may include one or more buses 2112, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1.   A method comprising, by one or more computing systems:
accessing a plurality of data profiles associated with a vessel, wherein the plurality of data profiles comprise at least:

a first data profile configured for assessing condition or integrity risks associated with the vessel;

a second data profile configured for assessing statutory, regulatory, and port state control;
a third data profile configured for assessing quality of one or more management systems;
a fourth data profile configured for assessing class trend associated with one or more sister vessels; and
a fifth data profile configured for assessing sustainability based on fuel consumption and emissions;
analyzing the accessed data profiles by a predictive compliance model configured for quantifying and assessing an overall risk associated with vessels being out of compliance with one or more standards, wherein the predictive compliance model comprises one or more data models and one or more computational models;
determining, based on the analysis, a class-related risk profiling capability and one or more risks of systems and components associated with the vessel with respect to condition and class compliance; and
sending, to a client system, instructions for presenting the class-related risk profiling capability and the one or more risks of systems and components associated with the vessel with respect to condition and class compliance to a user.

2. The method of Claim 1, further comprising:
generating, based on the analysis, a plan for repair, drydock punchlist, or of operational availability prior to a repair campaign or a drydock period.

3. The method of Claim 1 or 2, further comprising:
generating, based on the analysis, a maintenance program comprising one or more of a predictive maintenance strategy, a condition-based maintenance strategy, or a readiness-based maintenance strategy.

4. The method of any of Claims 1 to 3, further comprising:
detecting, based on the analysis, an initiation of one or more of a hull structural problem or an equipment or system problem.

5. The method of any of Claims 1 to 4, further comprising:

generating, based on the analysis, a class survey plan for a condition-based program, wherein the class survey plan comprises one or more of an annual survey feature, a special survey feature, a remote survey execution plan, a targeted survey time on board, a high-risk system, a high-risk component, or a survey frequency;
optionally, further comprising:

determining one or more class types on survey crediting for the class survey plan; and/or
optionally, further comprising:
determining one or more extensions to one or more survey windows associated with the class survey plan.

6. The method of any of Claims 1 to 5, wherein the class-related risk profiling capability comprises an overall vessel risk score;
optionally, wherein each of the plurality of data profiles is associated with a respective profile score, and wherein the overall vessel risk score is determined on the plurality of profile scores associated with the plurality of data profiles.

7. The method of any of Claims 1 to 6, wherein each of the plurality of data profiles comprises one or more lagging and one or more leading factors, wherein each of the one or more lagging factors is associated with a respective weight, and wherein each of the one or more leading factors is associated with a respective weight;
optionally, further comprising:

accessing, by the predictive compliance model, one or more indicators comprising one or more of a first indicator for predictive condition, a second indicator for damage exposure, a lagging factor, or a leading factor, wherein determining the class-related risk profiling capability and the one or more risks of systems and components associated with the vessel with respect to condition and class compliance is further based on the one or more indicators; and/or
optionally, further comprising:

determining, based on the first data profile and the one or more lagging factors associated with the first data profile, a current condition of a hull or a machinery associated with the vessel with respect to one or more class and statutory requirements; and/or
optionally, further comprising:

determining, based on the first data profile and the one or more leading factors associated with the first data profile, a condition degradation of an asset associated with the vessel to evaluate; and/or

optionally, wherein the one or more lagging factors associated with each of the plurality of data profiles are determined based on transactional data, and wherein each of the lagging factors is based on one or more of surveyor condition scoring, user maintenance completion, user maintenance effectiveness, condition monitoring, a smart function, or a condition of class; and/or

optionally, wherein the one or more leading factors associated each of the plurality of data files are determined based on one or more of transactional data, time-series sensor data, or contextual data.

8. The method of any of Claims 1 to 7, further comprising:

generating, based on the analysis, a class survey plan for a condition-based program;
benchmarking the vessel amongst a vessel class or a fleet comprising a plurality of vessels; and
determining one or more vessels among the vessel class or the fleet as one or more targets for the class survey plan.

9. The method of any of Claims 1 to 8, further comprising:
generating the first data profile based on one or more of transactional data, time-series sensor data, or contextual data.

10. The method of any of Claims 1 to 9, further comprising:
aligning one or more maintenance activities by an operator of the vessel with one or more class compliance activities.

11. The method of any of Claims 1 to 10, further comprising:

generating, for the first data profile, a structural score based on one or more criteria comprising one or more of a scaled grading set of criteria based on condition severity for a plurality of categories of condition, a strength critical area, a fatigue critical area, or a structural alert.
optionally, wherein the plurality of categories of condition comprise one or more of coating, corrosion, pitting and grooving, fractures, deformation, or cleanness.

12. The method of any of Claims 1 to 11, further comprising:
generating, for the first data profile, a machinery score based on one or more of planned maintenance data, condition monitoring data, data associated with mean time between repairs, a condition of class, analysis scoring of reliability, availability and maintainability, or an anomaly detection.

13. The method of any of Claims 1 to 12, wherein the one or more standards comprise one or more regulatory standards at present or at any future point.

14. One or more computer-readable non-transitory storage media embodying software that is operable when executed to:
access a plurality of data profiles associated with a vessel, wherein the plurality of data profiles comprise at least:

a first data profile configured for assessing condition or integrity risks associated with the vessel;
a second data profile configured for assessing statutory, regulatory, and port state control;
a third data profile configured for assessing quality of one or more management systems;
a fourth data profile configured for assessing class trend associated with one or more sister vessels; and
a fifth data profile configured for assessing sustainability based on fuel consumption and emissions;
analyze the accessed data profiles by a predictive compliance model configured for quantifying and assessing an overall risk associated with vessels being out of compliance with one or more standards, wherein the predictive compliance model comprises one or more data models and one or more computational models;
determine, based on the analysis, a class-related risk profiling capability and one or more risks of systems and components associated with the vessel with respect to condition and class compliance; and
send, to a client system, instructions for presenting the class-related risk profiling capability and the one or more risks of systems and components associated with the vessel with respect to condition and class compliance to a user.

15. A system comprising: one or more processors; and a non-transitory memory coupled to the processors comprising instructions executable by the processors, the processors operable when executing the instructions to:
access a plurality of data profiles associated with a vessel, wherein the plurality of data profiles comprise at least:

a first data profile configured for assessing condition or integrity risks associated with the vessel;
a second data profile configured for assessing statutory, regulatory, and port state control;
a third data profile configured for assessing quality of one or more management systems;
a fourth data profile configured for assessing class trend associated with one or more sister vessels; and
a fifth data profile configured for assessing sustainability based on fuel consumption and emissions;
analyze the accessed data profiles by a predictive compliance model configured for quantifying and assessing an overall risk associated with vessels being out of compliance with one or more standards, wherein the predictive compliance model comprises one or more data models and one or more computational models;
determine, based on the analysis, a class-related risk profiling capability and one or more risks of systems and components associated with the vessel with respect to condition and class compliance; and
send, to a client system, instructions for presenting the class-related risk profiling capability and the one or more risks of systems and components associated with the vessel with respect to condition and class compliance to a user.

## Patentansprüche

1. Ein Verfahren, das von einem oder mehreren Computersystemen durchgeführt wird:
Zugriff auf eine Vielzahl von Datenprofilen, die mit einem Schiff verbunden sind, wobei die Vielzahl von Datenprofilen mindestens Folgendes umfasst:

ein erstes Datenprofil, das zur Bewertung von Zustands- oder Integritätsrisiken im Zusammenhang mit dem Schiff konfiguriert ist;
ein zweites Datenprofil, das zur Bewertung gesetzlicher, behördlicher und Hafenstaatkontrollen konfiguriert ist;
ein drittes Datenprofil, das zur Bewertung der Qualität eines oder mehrerer Managementsysteme konfiguriert ist;
ein viertes Datenprofil, das zur Bewertung von Klassentrends konfiguriert ist, die mit einem oder mehreren Schwesterschiffen verbunden sind; und
ein fünftes Datenprofil, das zur Bewertung der Nachhaltigkeit auf der Grundlage des Kraftstoffverbrauchs und der Emissionen konfiguriert ist;
Analysieren der abgerufenen Datenprofile durch ein prädiktives Konformitätsmodell, das zur Quantifizierung und Bewertung eines Gesamtrisikos im Zusammenhang mit Schiffen konfiguriert ist, die eine oder mehrere Normen nicht erfüllen, wobei das prädiktive Konformitätsmodell ein oder mehrere Datenmodelle und ein oder mehrere Berechnungsmodelle umfasst;
Bestimmen, basierend auf der Analyse, einer klassenbezogenen Risikoprofilierungsfähigkeit und eines oder mehrerer Risiken von Systemen und Komponenten, die mit dem Schiff in Bezug auf Zustand und Klassenkonformität verbunden sind; und
Senden von Anweisungen an ein Client-System, um einem Benutzer die klassenbezogene Risikoprofilierungsfähigkeit und das eine oder die mehreren Risiken von Systemen und Komponenten im Zusammenhang mit dem Schiff in Bezug auf den Zustand und die Klasseneinhaltung darzustellen.

2. Verfahren nach Anspruch 1, ferner umfassend:
Erstellen eines Plans für Reparaturen, einer Trockendockarbeitsliste oder der Betriebsbereitschaft vor einer Reparaturkampagne oder einer Trockendockperiode auf der Grundlage der Analyse.

3. Verfahren nach Anspruch 1 oder 2, ferner umfassend:
Erstellen eines Wartungsprogramms auf der Grundlage der Analyse, das eine oder mehrere der folgenden Strategien umfasst: eine vorausschauende Wartungsstrategie, eine zustandsorientierte Wartungsstrategie oder eine bereitschaftsorientierte Wartungsstrategie.

4. Verfahren nach einem der Ansprüche 1 bis 3, ferner umfassend:
Erkennen, basierend auf der Analyse, eines Auftretens eines oder mehrerer Probleme mit der Rumpfstruktur oder eines Problems mit der Ausrüstung oder dem System.

5. Verfahren nach einem der Ansprüche 1 bis 4, ferner umfassend:

Erstellen eines Klassenüberprüfungsplans für ein zustandsbasiertes Programm auf der Grundlage der Analyse, wobei der Klassenüberprüfungsplan eines oder mehrere der folgenden Elemente umfasst: eine jährliche Überprüfungsfunktion, eine spezielle Überprüfungsfunktion, einen Plan zur Durchführung einer Fernüberprüfung, einen gezielten Überprüfungszeitpunkt an Bord, ein System mit hohem Risiko, eine Komponente mit hohem Risiko oder eine Überprüfungshäufigkeit;
optional ferner umfassend:

Bestimmen eines oder mehrerer Klassentypen für die Vergabe von Überprüfungsgutschriften für den Klassenüberprüfungsplan; und/oder
optional zusätzlich umfassend:
Festlegen einer oder mehrerer Verlängerungen für ein oder mehrere mit dem Klassenüberprüfungsplan verbundene Überprüfungsfenster.

6. Verfahren nach einem der Ansprüche 1 bis 5, wobei die klassenbezogene Risikoprofilierungsfähigkeit eine Gesamtrisikobewertung für das Schiff umfasst; wobei optional jedes der mehreren Datenprofile mit einer entsprechenden Profilbewertung verbunden ist und wobei die Gesamtrisikobewertung für das Schiff auf der Grundlage der mehreren Profilbewertungen, die mit den mehreren Datenprofilen verbunden sind, bestimmt wird.

7. Verfahren nach einem der Ansprüche 1 bis 6, wobei jedes der mehreren Datenprofile einen oder mehrere nachlaufende und einen oder mehrere vorlaufende Faktoren umfasst, wobei jeder der einen oder mehreren nachlaufenden Faktoren mit einem entsprechenden Gewicht verbunden ist und wobei jeder der einen oder mehreren vorlaufenden Faktoren mit einem entsprechenden Gewicht verbunden ist;
optional ferner umfassend:

Zugriff durch das prädiktive Konformitätsmodell auf einen oder mehrere Indikatoren, die einen oder mehrere erste Indikatoren für den prädiktiven Zustand, einen zweiten Indikator für die Schadensgefährdung, einen nachlaufenden Faktor oder einen vorlaufenden Faktor umfassen, wobei die Bestimmung der klassenbezogenen Risikoprofilierungsfähigkeit und des einen oder der mehreren Risiken von Systemen und Komponenten, die mit dem Schiff in Bezug auf den Zustand und die Klassenkonformität verbunden sind, ferner auf dem einen oder den mehreren Indikatoren basiert; und/oder
optional, ferner umfassend:

Bestimmung eines aktuellen Zustands eines Rumpfs oder einer Maschine, die mit dem Schiff in Verbindung stehen, in Bezug auf eine oder mehrere Klassen- und gesetzliche Anforderungen auf der Grundlage des ersten Datenprofils und des einen oder der mehreren Verzögerungsfaktoren, die mit dem ersten Datenprofil in Verbindung stehen; und/oder
optional, ferner umfassend:

Bestimmen einer Zustandsverschlechterung einer mit dem Schiff verbundenen Anlage zur Bewertung auf der Grundlage des ersten Datenprofils und des einen oder der mehreren mit dem ersten Datenprofil verbundenen vorlaufenden Faktoren; und/oder
optional, wobei der eine oder die mehreren nachlaufenden Faktoren, die mit jedem der mehreren Datenprofile verbunden sind, auf der Grundlage von Transaktionsdaten bestimmt werden und wobei jeder der nachlaufenden Faktoren auf einem oder mehreren der folgenden Faktoren basiert: Zustandsbewertung durch einen Gutachter, Abschluss der Wartung durch den Benutzer, Wirksamkeit der Wartung durch den Benutzer, Zustandsüberwachung, einer intelligenten Funktion oder einem Klassenzustand; und/oder
optional, wobei der eine oder die mehreren vorlaufenden Faktoren, die mit jeder der mehreren Datendateien verbunden sind, auf der Grundlage einer oder mehrerer Transaktionsdaten, Zeitreihen-Sensordaten oder Kontextdaten bestimmt werden.

8. Verfahren nach einem der Ansprüche 1 bis 7, ferner umfassend:

Erstellen eines Klassenüberprüfungsplans für ein zustandsbasiertes Programm auf der Grundlage der Analyse;
Benchmarking des Schiffes innerhalb einer Schiffsklasse oder einer Flotte, die eine Vielzahl von Schiffen umfasst; und
Bestimmen eines oder mehrerer Schiffe innerhalb der Schiffsklasse oder der Flotte als ein oder mehrere Ziele für den Klassenüberprüfungsplan.

9. Verfahren nach einem der Ansprüche 1 bis 8, ferner umfassend:
Erstellen des ersten Datenprofils auf der Grundlage einer oder mehrerer Transaktionsdaten, Zeitreihen-Sensordaten oder Kontextdaten.

10. Verfahren nach einem der Ansprüche 1 bis 9, ferner umfassend:
Ausrichten einer oder mehrerer Wartungsaktivitäten durch einen Betreiber des Schiffes mit einer oder mehreren Aktivitäten zur Einhaltung der Klassenbestimmungen.

11. Verfahren nach einem der Ansprüche 1 bis 10, ferner umfassend:

Erzeugen einer Strukturbewertung für das erste Datenprofil auf der Grundlage eines oder mehrerer Kriterien, die eines oder mehrere der folgenden Elemente umfassen: einen skalierten Bewertungssatz von Kriterien auf der Grundlage der Schwere des Zustands für eine Vielzahl von Zustandskategorien, einen festigkeitskritischen Bereich, einen ermüdungskritischen Bereich oder eine strukturelle Warnung. wobei die Vielzahl von Zustandskategorien optional eine oder mehrere der folgenden umfasst: Beschichtung, Korrosion, Lochfraß und Rillenbildung, Brüche, Verformung oder Sauberkeit.

12. Verfahren nach einem der Ansprüche 1 bis 11, ferner umfassend:
Erzeugen einer Maschinenbewertung für das erste Datenprofil auf der Grundlage eines oder mehrerer der folgenden Elemente: geplante Wartungsdaten, Zustandsüberwachungsdaten, Daten im Zusammenhang mit der mittleren Zeit zwischen Reparaturen, einem Zustand der Klasse, einer Analysebewertung der Zuverlässigkeit, Verfügbarkeit und Wartbarkeit oder einer Anomalieerkennung.

13. Verfahren nach einem der Ansprüche 1 bis 12, wobei die eine oder mehreren Normen eine oder mehrere derzeitige oder zukünftige regulatorische Normen umfassen.

14. Ein oder mehrere computerlesbare, nicht-transitorische Speichermedien, die Software enthalten, die bei Ausführung folgende Funktionen ausführt:
Zugriff auf eine Vielzahl von Datenprofilen, die mit einem Behälter verbunden sind, wobei die Vielzahl von Datenprofilen mindestens Folgendes umfasst:

ein erstes Datenprofil, das zur Bewertung von Zustands- oder Integritätsrisiken im Zusammenhang mit dem Schiff konfiguriert ist;
ein zweites Datenprofil, das zur Bewertung der gesetzlichen, behördlichen und Hafenstaatkontrolle konfiguriert ist;
ein drittes Datenprofil, das zur Bewertung der Qualität eines oder mehrerer Managementsysteme konfiguriert ist;
ein viertes Datenprofil, das zur Bewertung von Klassentrends im Zusammenhang mit einem oder mehreren Schwesterschiffen konfiguriert ist; und
ein fünftes Datenprofil, das zur Bewertung der Nachhaltigkeit auf der Grundlage des Kraftstoffverbrauchs und der Emissionen konfiguriert ist;
Analyse der abgerufenen Datenprofile durch ein prädiktives Konformitätsmodell, das zur Quantifizierung und Bewertung eines Gesamtrisikos im Zusammenhang mit Schiffen konfiguriert ist, die eine oder mehrere Normen nicht erfüllen, wobei das prädiktive Konformitätsmodell ein oder mehrere Datenmodelle und ein oder mehrere Berechnungsmodelle umfasst;
Bestimmen einer klassenbezogenen Risikoprofilierungsfähigkeit und eines oder mehrerer Risiken von Systemen und Komponenten, die mit dem Schiff in Bezug auf Zustand und Klassenkonformität verbunden sind, auf der Grundlage der Analyse; und
Senden von Anweisungen an ein Client-System, um einem Benutzer die klassenbezogene Risikoprofilierungsfähigkeit und das eine oder die mehreren Risiken von Systemen und Komponenten im Zusammenhang mit dem Schiff in Bezug auf den Zustand und die Klasseneinhaltung darzustellen.

15. Ein System, das Folgendes umfasst: einen oder mehrere Prozessoren; und einen nichtflüchtigen Speicher, der mit den Prozessoren gekoppelt ist und von den Prozessoren ausführbare Anweisungen umfasst, wobei die Prozessoren bei der Ausführung der Anweisungen in der Lage sind:
Zugriff auf eine Vielzahl von Datenprofilen, die mit einem Schiff verbunden sind, wobei die Vielzahl von Datenprofilen mindestens Folgendes umfasst:

ein erstes Datenprofil, das zur Bewertung von Zustands- oder Integritätsrisiken im Zusammenhang mit dem Schiff konfiguriert ist;

ein zweites Datenprofil, das zur Bewertung gesetzlicher, behördlicher und Hafenstaatkontrollen konfiguriert ist;

ein drittes Datenprofil, das zur Bewertung der Qualität eines oder mehrerer Managementsysteme konfiguriert ist;

ein viertes Datenprofil, das zur Bewertung von Klassentrends konfiguriert ist, die mit einem oder mehreren Schwesterschiffen verbunden sind; und

ein fünftes Datenprofil, das zur Bewertung der Nachhaltigkeit auf der Grundlage des Kraftstoffverbrauchs und der Emissionen konfiguriert ist;

Analyse der abgerufenen Datenprofile durch ein prädiktives Konformitätsmodell, das zur Quantifizierung und Bewertung eines Gesamtrisikos im Zusammenhang mit Schiffen konfiguriert ist, die eine oder mehrere Normen nicht erfüllen, wobei das prädiktive Konformitätsmodell ein oder mehrere Datenmodelle und ein oder mehrere Berechnungsmodelle umfasst;

Bestimmen einer klassenbezogenen Risikoprofilierungsfähigkeit und eines oder mehrerer Risiken von Systemen und Komponenten, die mit dem Schiff in Bezug auf Zustand und Klassenkonformität verbunden sind, auf der Grundlage der Analyse; und

Senden von Anweisungen an ein Client-System, um einem Benutzer die klassenbezogene Risikoprofilierungsfähigkeit und das eine oder die mehreren Risiken von Systemen und Komponenten im Zusammenhang mit dem Schiff in Bezug auf den Zustand und die Klasseneinhaltung darzustellen.

**Revendications**

1. Procédé comprenant, par un ou plusieurs systèmes informatiques :

   l'accès à une pluralité de profils de données associés à un navire, dans lequel la pluralité de profils de données comprend au moins :

   un premier profil de données configuré pour évaluer les risques liés à l'état ou à l'intégrité associés au navire ;
   un deuxième profil de données configuré pour évaluer les contrôles statutaires, réglementaires et par l'État du port ;
   un troisième profil de données configuré pour évaluer la qualité d'un ou plusieurs systèmes de gestion ;
   un quatrième profil de données configuré pour évaluer la tendance de classe associée à un ou plusieurs navires jumeaux ; et
   un cinquième profil de données configuré pour évaluer la durabilité sur la base de la consommation de carburant et des émissions ;
   analyser les profils de données consultés à l'aide d'un modèle de conformité prédictif configuré pour quantifier et évaluer le risque global associé aux navires non conformes à une ou plusieurs normes, le modèle de conformité prédictif comprenant un ou plusieurs modèles de données et un ou plusieurs modèles de calcul ;
   déterminer, sur la base de l'analyse, une capacité de profilage des risques liés à la classe et un ou plusieurs risques des systèmes et composants associés au navire en ce qui concerne l'état et la conformité à la classe ; et
   envoyer à un système client des instructions pour présenter à un utilisateur la capacité de profilage des risques liés à la classe et le ou les risques liés aux systèmes et composants associés au navire en ce qui concerne l'état et la conformité à la classe.

2. Le procédé selon la revendication 1, comprenant en outre :

   générer, sur la base de l'analyse, un plan de réparation, une liste de tâches à effectuer en cale sèche ou un plan de disponibilité opérationnelle avant une campagne de réparation ou une période en cale sèche.

3. Le procédé selon la revendication 1 ou 2, comprenant en outre :

   générer, sur la base de l'analyse, un programme de maintenance comprenant une ou plusieurs stratégies de maintenance prédictive, de maintenance conditionnelle ou de maintenance basée sur l'état de préparation.

4. Le procédé selon l'une quelconque des revendications 1 à 3, comprenant en outre :

   la détection, sur la base de l'analyse, du début d'un ou plusieurs problèmes structurels de la coque ou problèmes d'équipement ou de système.

5. Le procédé selon l'une quelconque des revendications 1 à 4, comprenant en outre :

   générer, sur la base de l'analyse, un plan d'inspection de classe pour un programme basé sur l'état, dans lequel le plan d'inspection de classe comprend un ou plusieurs des éléments suivants : une caractéristique d'inspection annuelle, une caractéristique d'inspection spéciale, un plan d'exécution d'inspection à distance, un temps d'inspection ciblé à bord, un système à haut risque, un composant à haut risque ou une fréquence d'inspection ; facultativement, comprenant en outre :

la détermination d'un ou plusieurs types de classe pour l'attribution de crédits d'inspection pour le plan d'inspection de classe ; et/ou
facultativement, comprenant en outre :
déterminer une ou plusieurs extensions d'une ou plusieurs fenêtres d'inspection associées au plan d'inspection de classe.

6. Le procédé selon l'une quelconque des revendications 1 à 5, dans lequel la capacité de profilage des risques liés à la classe comprend un score global de risque du navire ; facultativement, dans lequel chacun des multiples profils de données est associé à un score de profil respectif, et dans lequel le score de risque global du navire est déterminé à partir des multiples scores de profil associés aux multiples profils de données.

7. Le procédé selon l'une quelconque des revendications 1 à 6, dans lequel chacun des multiples profils de données comprend un ou plusieurs facteurs retardés et un ou plusieurs facteurs avancés, dans lequel chacun des un ou plusieurs facteurs retardés est associé à un poids respectif, et dans lequel chacun des un ou plusieurs facteurs avancés est associé à un poids respectif ; comprenant en outre, de manière facultative :

l'accès, par le modèle de conformité prédictif, à un ou plusieurs indicateurs comprenant un ou plusieurs d'un premier indicateur pour l'état prédictif, un deuxième indicateur pour l'exposition aux dommages, un facteur retardé ou un facteur avancé, dans lequel la détermination de la capacité de profilage des risques liés à la classe et du ou des risques des systèmes et composants associés au navire en ce qui concerne l'état et la conformité à la classe est en outre basée sur le ou les indicateurs ; et/ou
facultativement, comprenant en outre :

déterminer, sur la base du premier profil de données et d'un ou plusieurs facteurs de retard associés au premier profil de données, l'état actuel d'une coque ou d'une machine associée au navire en ce qui concerne une ou plusieurs exigences de classe et légales ; et/ou
facultativement, comprenant en outre :

déterminer, sur la base du premier profil de données et d'un ou plusieurs facteurs avancés associés au premier profil de données, une dégradation de l'état d'un actif associé au navire à évaluer ; et/ou
facultativement, dans lequel le ou les facteurs retardés associés à chacun de la pluralité de profils de données sont déterminés sur la base de données transactionnelles, et dans lequel chacun des facteurs retardés est basé sur un ou plusieurs des éléments suivants : notation de l'état par un expert, achèvement de la maintenance par l'utilisateur, efficacité de la maintenance par l'utilisateur, surveillance de l'état, fonction intelligente ou état de classe ; et/ou
facultativement, dans lequel le ou les facteurs avancés associés à chacun des multiples fichiers de données sont déterminés sur la base d'une ou plusieurs données transactionnelles, données de capteurs chronologiques ou données contextuelles.

8. Le procédé selon l'une quelconque des revendications 1 à 7, comprenant en outre :

générer, sur la base de l'analyse, un plan d'inspection de classe pour un programme basé sur l'état ;
l'évaluation comparative du navire parmi une classe de navires ou une flotte comprenant une pluralité de navires ; et
la détermination d'un ou plusieurs navires parmi la classe de navires ou la flotte comme une ou plusieurs cibles pour le plan d'inspection de classe.

9. Le procédé selon l'une quelconque des revendications 1 à 8, comprenant en outre :
générer le premier profil de données sur la base d'une ou plusieurs données transactionnelles, données de capteurs chronologiques ou données contextuelles.

10. Le procédé selon l'une quelconque des revendications 1 à 9, comprenant en outre :

aligner une ou plusieurs activités de maintenance effectuées par un opérateur du navire avec une ou plusieurs activités de conformité de classe.

11. Le procédé selon l'une quelconque des revendications 1 à 10, comprenant en outre :

générer, pour le premier profil de données, une note structurelle basée sur un ou plusieurs critères comprenant un ou plusieurs ensembles de critères de notation à échelle basés sur la gravité de l'état pour une pluralité de catégories d'état, une zone critique en termes de résistance, une zone critique en termes de fatigue ou une alerte structurelle.

facultativement, dans lequel la pluralité de catégories d'état comprend un ou plusieurs des éléments suivants : revêtement, corrosion, piqûres et rainures, fractures, déformation ou propreté.

12. Le procédé selon l'une quelconque des revendications 1 à 11, comprenant en outre :
générer, pour le premier profil de données, un score de machine basé sur une ou plusieurs données de maintenance planifiée, données de surveillance de l'état, données associées au temps moyen entre les réparations, état de classe, score d'analyse de la fiabilité, de la disponibilité et de la maintenabilité, ou détection d'anomalie.

13. Le procédé selon l'une quelconque des revendications 1 à 12, dans lequel la ou les normes comprennent une ou plusieurs normes réglementaires actuelles ou futures.

14. Un ou plusieurs supports de stockage non transitoires lisibles par ordinateur incorporant un logiciel qui, lorsqu'il est exécuté, permet :
accéder à une pluralité de profils de données associés à un navire, dans lequel la pluralité de profils de données comprend au moins :

un premier profil de données configuré pour évaluer les risques liés à l'état ou à l'intégrité du navire ;
un deuxième profil de données configuré pour évaluer le contrôle statutaire, réglementaire et par l'État du port ;
un troisième profil de données configuré pour évaluer la qualité d'un ou plusieurs systèmes de gestion ;
un quatrième profil de données configuré pour évaluer la tendance de classe associée à un ou plusieurs navires jumeaux ; et
un cinquième profil de données configuré pour évaluer la durabilité sur la base de la consommation de carburant et des émissions ;
analyser les profils de données consultés à l'aide d'un modèle de conformité prédictif configuré pour quantifier et évaluer le risque global associé aux navires non conformes à une ou plusieurs normes, le modèle de conformité prédictif comprenant un ou plusieurs modèles de données et un ou plusieurs modèles de calcul ;
déterminer, sur la base de l'analyse, une capacité de profilage des risques liés à la classe et un ou plusieurs risques des systèmes et composants associés au navire en ce qui concerne l'état et la conformité à la classe ; et
envoyer à un système client des instructions pour présenter à un utilisateur la capacité de profilage des risques liés à la classe et le ou les risques liés aux systèmes et composants associés au navire en ce qui concerne l'état et la conformité à la classe.

15. Système comprenant : un ou plusieurs processeurs ; et une mémoire non transitoire couplée aux processeurs comprenant des instructions exécutables par les processeurs, les processeurs pouvant fonctionner lors de l'exécution des instructions pour :
accéder à une pluralité de profils de données associés à un navire, dans lequel la pluralité de profils de données comprend au moins :

un premier profil de données configuré pour évaluer les risques liés à l'état ou à l'intégrité associés au navire ;
un deuxième profil de données configuré pour évaluer la conformité aux lois, aux réglementations et au contrôle par l'État du port ;
un troisième profil de données configuré pour évaluer la qualité d'un ou plusieurs systèmes de gestion ;
un quatrième profil de données configuré pour évaluer la tendance de classe associée à un ou plusieurs navires jumeaux ; et
un cinquième profil de données configuré pour évaluer la durabilité sur la base de la consommation de carburant et des émissions ;
analyser les profils de données consultés à l'aide d'un modèle de conformité prédictif configuré pour quantifier et évaluer le risque global associé aux navires non conformes à une ou plusieurs normes, le modèle de conformité prédictif comprenant un ou plusieurs modèles de données et un ou plusieurs modèles de calcul ;

déterminer, sur la base de l'analyse, une capacité de profilage des risques liés à la classe et un ou plusieurs risques des systèmes et composants associés au navire en ce qui concerne l'état et la conformité à la classe ; et envoyer à un système client des instructions pour présenter à un utilisateur la capacité de profilage des risques liés à la classe et le ou les risques liés aux systèmes et composants associés au navire en ce qui concerne l'état et la conformité à la classe.

**100**

Vessel Type & Age Specific
Traditional Class
110

Vessel Design Specific
Modern Class
120

Vessel-Operation Specific
Condition Based Program
130

| Areas Of Special Attention Identified Through Historical Survey Records Of The Same Vessel Category/Type. | Areas Of Special Attention Identified Through Engineering Analysis And Equipment Survey Data Trending Of Individual Designs/Models. | Areas Of Special Attention Identified Through The Vessel's Experienced Environmental Loads And Operational History. |
| --- | --- | --- |
| Survey Plan Per Vessel Type And Vessel Age. | Survey Plan Is Generated For Individual Design Series. | Survey Plan Is Generated/Updated For Individual Vessel. |

*FIG. 1*

EP 4 526 204 B1

EP 4 526 204 B1

| Structural CBP 210 | | Machinery CBP 230 | |
|---|---|---|---|
| S3 215c | Hull Sensor Dashboard<br><br>Sensor Plan | M3 235c | Anomaly Detection |
| S2 215b | 3D Condition Database & Anatomy & Repair Planning | M2 235b | RAM Assessment |
| S1 215a | 2D Condition Database<br><br>Structural Dashboard<br><br>ABS Survey Reporting System | M1 235a | Survey Reporting System |

Structures 215       Machinery 235

PCM 200            PCM 200

| Structures Survey Planning Document  220 | Machinery Survey Planning Document 240 |
|---|---|

CBP Survey Plan 250

**FIG. 2**

**300**

| Operational Data 310 | In-Situation Tests 320 | Events Data 330 |
|---|---|---|
| • Sensor Data<br>• Tag Mapping<br>• Placement And Measurement | • Oil Tests<br>• Vibration Tests | • Failure Events<br>• Case Findings<br>• Warranty Logs<br>• Equipment Breakdown Structure |

Data+Domain+Data Science

Domain   Analytics   Outcomes

| Parts Consumption 340 | Additional Data 350 | Inspection/ Survey Data 360 |
|---|---|---|
| • Planned Vs. Unplanned<br>• Cost Of Events | • Demographics<br>• Ocean Conditions<br>• KPIs | • Gaugings<br>• Corrosion<br>• Design And Mods |

*FIG. 3*

EP 4 526 204 B1

*FIG. 4*

| Core Class Vessels 505 |
|---|

Asset Traders Seeking Basic Compliance Through:
● Standard OEM Preventive Maintenance Cycle
● Standard Dry Dock & Survey Cycle
● Limited Data Integration Across Systems
● Traditional Survey

19 Hr
Survey
Duration

Optimized Survey Plan 570a
Manual Checks

| | Item 1 |
|---|---|
| | Item 2 |
| | Item 3 |
| | Item 4 |
| | Item 5 |

| Enhanced Class Vessels 510 |
|---|

Asset Keepers Seeking Operational Optimization Through:
● Performance & Health Monitoring
● Use of Analytics And Smart Technology
● Improved Utilization & Extended Dry Dock
● Highly Digital & Integrated Systems
● Use of RCM & RBI

12 Hr
Survey
Duration

Optimized Survey Plan 570b
Manual Checks

| | Item 1 |
|---|---|
| | Item 2 |
| | Item 3 |

Automated Checks

| | Item 4 |
|---|---|
| | Item 5 |
| | Item 6 |

*FIG. 5A*

Class Corporate Knowledge 516

PCM

Computerized Survey Management Systems 515

525

3rd Party Data

Predictive Compliance Model 545

RAM 530a

RAM 530b

1st Party Developed

Data-Driven Insights 550

1st Party Approved

Structure 536a  Structure 536b

Hull Sensors 535

Machine Health 541a  Machine Health 541b

Machinery Sensors 540

Remove Survey 570

Vendor Approval 520

Approvals & Recurring V&V 521 Of:
● OEMs: Health & Sustainability Monitoring
● 3rd Party Analytics Solutions
● Interoperability & Reliability Solutions
● Data Infrastructure & Cyber Monitoring

Survey Visits 575

Year 1     Year 2     Year 3     Year 4     Year 5

*FIG. 5B*

Survey Replated
555

Optimized Survey
Plans To Surveyors
560

75/25
% Labor
Split

Decision Support Center 565

Remote Survey Hub Specializes In:
- Data-Enable Survey Support
- Remote Survey Execution
- Troubleshooting & RCA
- SME Support
- Finding Resolution
- Damage Surveys

3 Hr
Survey
Prepation

Fleet Adoption 580

Speciality Vessels
20 % Container Ships Gas
Carriers Offshore

General Cargo
Bulkers Tankers

80 %

Late Majority
& Laggards

Time ⟶

*FIG. 5C*

600

Vessel Data Sources
610

Survey Reporting Systems Data Input (Automated)
620

User Data-Transactional 612

| CMMS PM/CM | CMMS Failures |

User Inspections/Data

Condition Based Notation Support/Evidence 622

Survey Prep & Planning (On-Board Or Remote Execution) 628

Remote Survey Data Support 624

User Smart Data 626

User Data-Time Series 614

Data Driven Insights 630

Machinery Sensors

Hull Sensors

Data Analysis 632

Visualization 634

RAM Analysis → RAMS Dashboard

Machinery Health Monitoring → Anomaly Deployment → Ship Alerts

Structural Eng. Analysis

Contextual Data 616

| Trade Route History | Hindcast Weather |

Hull Sensor Analysis

Structural Dashboard → Ship Alerts

*FIG. 6A*

**600**

Survey Reporting Virtual Vessel
**640**

Outcomes
**650**

Freedom 3D Data
Model Layer
**641**

Freedom SIM Model(s)
**642**

Freedom 3D Point
Cloud Spatial Layer
**643**

Freedom 3D
Photogrammetry Layer
**644**

Freedom Vessel SPD &
PCM Driven Survey Plan **645**

Freedom
Reporting Tool Smart
Scheduler Survey Process
**646**

Data Enabled
Virtual Twin
**652**

Survey
Plan
**654**

Optimal User
Maintenance **656**

User
CMMS

*FIG. 6B*

FIG. 7

**800**

*FIG. 8*

900

| Criteria Name 910 | Anomaly Threshold 920 | Weight (%) 930 | |
|---|---|---|---|
| Coating | 3 | 20 | /100 |
| Cleanliness | 3 | 20 | /100 |
| Corrosion | 3 | 10 | /100 |
| Fracture | 3 | 20 | /100 |
| Pitting And Grooving | 3 | 10 | /100 |
| Deformation | 3 | 20 | /100 |

*FIG. 9*

**1000**

| Stage 1 Data Collection 1010 | Stage 2 Data Pre-Processing 1020 | Stage 3 Analytical Models 1030 | Stage 4 Insights 1040 |

FIG. 10

1100

PCM Machinery
Score 1140

↑ B

Weightage Table
1130

A →   ← A

↑ A

| User Supplied 1112 | | | Freedom 1114 | Machinery Dashboard 1125 | |
|---|---|---|---|---|---|
| Planned Maintenance (PM) 1112a | Condition Monitoring (CM) 1112b | Failures (MTBR) 1112c | Condition Of Class (COC) 1114a | RAM Analysis 1122 | Anomaly Detection 1124 |
| Lagging Score 1110 | | | | Leading Score 1120 | |

*FIG. 11*

1200

| Condition And PCM Weights | | | | | | | |
|---|---|---|---|---|---|---|---|
| Category | Planned Maintenance | Condition Monitoring | COC | RAMS | MHM | Casuality Reporting | |
| X | 8 | 17 | 19.5 | 10.5 | 22 | 23 | 100/100 |
| Y | 14 | 3.1 | 20 | 0 | 28 | 34.9 | 100/100 |

*FIG. 12*

Risk Matrix 1310

| | | Rank | 0 | 1 | 2 |
|---|---|---|---|---|---|
| Consequence | 5 | | | | |
| | 4 | | | | |
| | 3 | | | | |
| | 2 | | | | |
| | 1 | | | | |

Consequences Table 1320

| 5 | Major Hull Grinder Envelope Components | Shell Longitudinals, Longitudinal Grinders, Stiffeners, Transverse Frames, And Attached Plating Comprising Uppermost Strength Deck And Bulkhead Deck. Innerbottom Continuous Longitudinal Structure. Structure Penetrating The Watertight Envelope Below Design Waterline |
|---|---|---|
| 4 | Continuous Longitudinal Strength Members And Subdivision Bulkheads | Longitudinal Grinders, Stiffeners, Transverse Frames, And Attached Plating Comprising Other Strength Deck(s) Continuous Longitudinal Bulkheads. Subdivision Bulkheads Below Bulkhead Deck And Structure Penetrating Watertight Envelope Above Design Waterline. Superstructure Acting As A Vital Space Boundary, Exterior Weathertight Boundary, And Superstructure Decks. Also Damage Control Deck When Not The Same As The Bulkhead Deck In Accordance With The Applicable Build Specification. |
| 3 | Other Decks, WT Structure, And Vital Spaces | Non-Continuous Watertight Longitudinal Bulkheads, Intermediary Transverse Watertight Bulkheads, Breasthooks, And Subdivision Bulkheads Above Bulkhead Deck Acting As Vital Space Boundaries Or Tank Boundaries. Structure Comprising Other Decks And/Or Platforms (Not Including Superstructure Decks). Tank Tops. |
| 2 | Non-Vital Superstructure And Minor Members | Superstructure Not Acting As A Vital Space Boundary No Exterior Weathertight Boundary, Minor Members Including Panel Breakers, Brackets, Small Headers, Etc. |
| 1 | Miscellaneous Bulkheads And Non-Primary Structure | Miscellaneous Bulkheads, Non-primary Structure Such As Injection Scoops, Foundations, Piping, Etc. |

*FIG. 13A*

| | | | | | |
|---|---|---|---|---|---|
| 3 | 4 | 5 | 6 | | |
| Likelihood | | | | | |

1312 — : High

1314 — : Medium High

1316 — : Medium Low

1318 — : Low

Likelihood Table 1330

| Likelihood | Unity (Actual Stress/Allowable Stress) | |
|---|---|---|
| | Aluminum | Steel |
| 0 | 1-1.07 | 0.95-1.00 |
| 1 | 1.07-1.14 | 1.00-1.05 |
| 2 | 1.14-1.21 | 1.05-1.10 |
| 3 | 1.21-1.28 | 1.10-1.15 |
| 4 | 1.28-1.35 | 1.15-1.20 |
| 5 | 1.35-1.42 | 1.20-1.25 |
| 6 | >1.42 | >1.25 |

*FIG. 13B*

Risk Matrix 1410

| | | | | | |
|---|---|---|---|---|---|
| Consequence | 5 | | | |
| | 4 | | | |
| | 3 | | | |
| | 2 | | | |
| | 1 | | | |
| | Rank | 0 | 1 | 2 |

Consequence Table 1320

| 5 | Major Hull Grinder Envelope Components | Shell Longitudinals, Longitudinal Grinders, Stiffeners, Transverse Frames, And Attached Plating Comprising Uppermost Strength Deck And Bulkhead Deck. Innerbottom Continuous Longitudinal Structure. Structure Penetrating The Watertight Envelope Below Design Waterline |
|---|---|---|
| 4 | Continuous Longitudinal Strength Members And Subdivision Bulkheads | Longitudinal Grinders, Stiffeners, Transverse Frames, And Attached Plating Comprising Other Strength Deck(s) Continuous Longitudinal Bulkheads. Subdivision Bulkheads Below Bulkhead Deck And Structure Penetrating Watertight Envelope Above Design Waterline. Superstructure Acting As A Vital Space Boundary, Exterior Weathertight Boundary, And Superstructure Decks. Also Damage Control Deck When Not The Same As The Bulkhead Deck In Accordance With The Applicable Build Specification. |
| 3 | Other Decks, WT Structure, And Vital Spaces | Non-Continuous Watertight Longitudinal Bulkheads, Intermediary Transverse Watertight Bulkheads, Breasthooks, And Subdivision Bulkheads Above Bulkhead Deck Acting As Vital Space Boundaries Or Tank Boundaries. Structure Comprising Other Decks And/Or Platforms (Not Including Superstructure Decks). Tank Tops. |
| 2 | Non-Vital Superstructure And Minor Members | Superstructure Not Acting As A Vital Space Boundary No Exterior Weathertight Boundary, Minor Members Including Panel Breakers, Brackets, Small Headers, Etc. |
| 1 | Miscellaneous Bulkheads And Non-Primary Structure | Miscellaneous Bulkheads, Non-primary Structure Such As Injection Scoops, Foundations, Piping, Etc. |

*FIG. 14A*

| 1412 | : High |
| 1414 | : Medium High |
| 1416 | : Medium Low |
| 1418 | : Low |

Likelihood Table 1420

| Strength RSE Likelihood Table | |
|---|---|
| Likelihood | Capacity |
| 0 | 1-1.05 |
| 1 | 1.05-1.10 |
| 2 | 1.10-1.15 |
| 3 | 1.15-1.20 |
| 4 | 1.20-1.25 |
| 5 | >1.25 |

*FIG. 14B*

Risk Matrix 1510

| Consequence | | Rank | 0 | 1 | 2 |
|---|---|---|---|---|---|
| | 5 | | | | |
| | 4 | | | | |
| | 3 | | | | |
| | 2 | | | | |
| | 1 | | | | |

Consequences Table 1320

| | | |
|---|---|---|
| 5 | Major Hull Grinder Envelope Components | Shell Longitudinals, Longitudinal Grinders, Stiffeners, Transverse Frames, And Attached Plating Comprising Uppermost Strength Deck And Bulkhead Deck. Innerbottom Continuous Longitudinal Structure. Structure Penetrating The Watertight Envelope Below Design Waterline |
| 4 | Continuous Longitudinal Strength Members And Subdivision Bulkheads | Longitudinal Grinders, Stiffeners, Transverse Frames, And Attached Plating Comprising Other Strength Deck(s) Continuous Longitudinal Bulkheads. Subdivision Bulkheads Below Bulkhead Deck And Structure Penetrating Watertight Envelope Above Design Waterline. Superstructure Acting As A Vital Space Boundary, Exterior Weathertight Boundary, And Superstructure Decks. Also Damage Control Deck When Not The Same As The Bulkhead Deck In Accordance With The Applicable Build Specification. |
| 3 | Other Decks, WT Structure, And Vital Spaces | Non-Continuous Watertight Longitudinal Bulkheads, Intermediary Transverse Watertight Bulkheads, Breasthooks, And Subdivision Bulkheads Above Bulkhead Deck Acting As Vital Space Boundaries Or Tank Boundaries. Structure Comprising Other Decks And/Or Platforms (Not Including Superstructure Decks). Tank Tops. |
| 2 | Non-Vital Superstructure And Minor Members | Superstructure Not Acting As A Vital Space Boundary No Exterior Weathertight Boundary, Minor Members Including Panel Breakers, Brackets, Small Headers, Etc. |
| 1 | Miscellaneous Bulkheads And Non-Primary Structure | Miscellaneous Bulkheads, Non-primary Structure Such As Injection Scoops, Foundations, Piping, Etc. |

## FIG. 15A

| | | | |
|---|---|---|---|
| 3 | 4 | 5 | 6 |

Likelihood

1512 — ▓ : High
1514 — ⬚ : Medium High
1516 — ⬚ : Medium Low
1518 — ■ : Low

Likelihood Table 1520

| Likelihood | Predicted Remaining Fatigue Life (Years) |
|---|---|
| 0 | >50 |
| 1 | 30-49 |
| 2 | 20-29 |
| 3 | 10-19 |
| 4 | 5-9 |
| 5 | 1-4 |
| 6 | <1 |

*FIG. 15B*

| Very High: | If the Anomaly Is Still Present, Areas Should Be Repaired And Modified |
|---|---|
| High: | If the Anomaly Is Still Present, Areas Should Be Repaired In Kind |
| Medium High: | Visual Inspection With NDT Of Area Yearly. NDT Should Be Utilized To Inspect For Initiation Of Fractures. Areas With High Or Medium High Fatigue Risk Should Be Repaired And Modified. Areas With Medium Low Or Low Fatigue Risk Should Be Repaired In Kind. |
| Medium : | Area Contained Within Hull; Visual Inspection With NDT Of Area Yearly. NDT Should Be Utilized To Inspect For Initiation Of Fractures. Area Contained Within Superstructure; Visual Inspection With NDT Of Area Every 2.5 Years. NDT Should Be Utilized To Inspect For For Initiation Of Fractures. Structure Should Be Repaired In Kind If An Anomaly Is Discovered. |
| Medium Low : | Visual Inspection With Ndt Of Area Every 2.5 Years. NDT Should Be Utilized To Inspect For Initiation Of Fractures. Structure Should Be Repaired In Kind If An Anomaly Is Discovered. |
| Low : | Visual Inspection Of Area Every 5 Years. Structure Should Be Repaired In Kind If An Anomaly Is Discovered. |

| Critical Area Based On Fatigue Analysis | Contains Anomaly | Repair In Kind | Repair In Kind | Repair In Kind | Modify | Modify | Modify |
|---|---|---|---|---|---|---|---|
| | High | 2.5 Year Inspection | Yearly/ 2.5 Year Inspection | Yearly/ 2.5 Year Inspection | Yearly Inspection | Yearly Inspection | Modify |
| | Medium High | 2.5 Year Inspection | 2.5 Year Inspection | Yearly/ 2.5 Year Inspection | Yearly Inspection | Yearly Inspection | Modify |
| | Medium Low | 2.5 Year Inspection | 2.5 Year Inspection | Yearly/ 2.5 Year Inspection | Yearly/ 2.5 Year Inspection | Yearly Inspection | Repair In Kind |
| | Low | 5 Year Inspection | 2.5 Year Inspection | 2.5 Year Inspection | Yearly/ 2.5 Year Inspection | Yearly Inspection | Repair In Kind |
| | None | No Action Required | 5 Year Inspection | 2.5 Year Inspection | Yearly/ 2.5 Year Inspection | Yearly/ 2.5 Year Inspection | Repair In Kind |
| | | None | Low | Medium Low | Medium High | High | Contains Anomaly |
| | | Critical Area Based On Strength Analysis | | | | | |

1610

*FIG. 16*

**1700**

*FIG. 17*

**FIG. 18**

1900

FIG. 19

<u>2000</u>

| |
|---|
| 2010 — Access a plurality of data profiles associated with a vessel, wherein the plurality of data profiles comprise at least: a first data profile configured for assessing condition or integrity risks associated with the vessel; a second data profile configured for assessing statutory, regulatory, and port state control; a third data profile configured for assessing quality of one or more management systems; a fourth data profile configured for assessing class trend associated with one or more sister vessels; and a fifth data profile configured for assessing sustainability based on fuel consumption and emissions, wherein each of the plurality of data profiles is associated with a respective profile score, wherein each of the plurality of data profiles comprises one or more lagging and one or more leading factors, wherein each of the one or more lagging factors is associated with a respective weight, wherein each of the one or more leading factors is associated with a respective weight, and wherein the first data profile is generated based on one or more of transactional data, time-series sensor data, or contextual data |

↓

| |
|---|
| 2020 — Analyze the accessed data profiles by a predictive compliance model configured for quantifying and assessing an overall risk associated with vessels being out of compliance with one or more standards, wherein the predictive compliance model comprises one or more data models and one or more computational models, and wherein the one or more standards comprise one or more regulatory standards at present or at any future point |

↓

| |
|---|
| 2030 — Determine, based on the analysis, a class-related risk profiling capability and one or more risks of systems and components associated with the vessel with respect to condition and class compliance, wherein the class-related risk profiling capability comprises an overall vessel risk score, and wherein the overall vessel risk score is determined on the plurality of profile scores associated with the plurality of data profiles |

↓

| |
|---|
| 2040 — Generate, based on the analysis, a plan for repair, drydock punchlist, or of operational availability prior to a repair campaign or a drydock period, a maintenance program comprising one or more of a predictive maintenance strategy, a condition-based maintenance strategy, or a readiness-based maintenance strategy, and a class survey plan for a condition-based program, wherein the class survey plan comprises one or more of an annual survey feature, a special survey feature, a remote survey execution plan, a targeted survey time on board, a high-risk system, a high-risk component, or a survey frequency |

↓

| |
|---|
| 2050 — Determine one or more class types on survey crediting for the class survey plan and one or more extensions to one or more survey windows associated with the class survey plan |

↓

| |
|---|
| 2060 — Detect, based on the analysis, an initiation of one or more of a hull structural problem or an equipment or system problem |

↓

| |
|---|
| 2070 — Align one or more maintenance activities by an operator of the vessel with one or more class compliance activities |

↓

| |
|---|
| 2080 — Send, to a client system, instructions for presenting the class-related risk profiling capability and the one or more risks of systems and components associated with the vessel with respect to condition and class compliance to a user |

*FIG. 20*

COMPUTER SYSTEM — 2100

2112

PROCESSOR — 2102

MEMORY — 2104

STORAGE — 2106

I/O INTERFACE — 2108

COMMUNICATION INTERFACE — 2110

*FIG. 21*

**EP 4 526 204 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220129909 A1